(19) Europäisches Patentamt
European Patent Office
Office européen des brevets

(11) Publication number : **0 330 616 B1**

(12) # EUROPEAN PATENT SPECIFICATION

(45) Date of publication of patent specification : **05.06.91 Bulletin 91/23**

(51) Int. Cl.$^5$ : **G02B 1/04,** C08G 77/46, C08F 230/08

(21) Application number : **89810124.1**

(22) Date of filing : **16.02.89**

(54) **Wettable, flexible, oxygen permeable contact lens containing block copolymer polysiloxane-polyoxyalkylene backbone units, and use thereof.**

(30) Priority : **26.02.88 US 160624**

(43) Date of publication of application : **30.08.89 Bulletin 89/35**

(45) Publication of the grant of the patent : **05.06.91 Bulletin 91/23**

(84) Designated Contracting States : **AT BE CH DE ES FR GB GR IT LI LU NL SE**

(56) References cited :
**GB-A- 2 119 951**
**GB-A- 2 163 173**

(56) References cited :
**US-A- 4 136 250**
**US-A- 4 153 641**
**US-A- 4 486 577**
**US-A- 4 632 968**

(73) Proprietor : **CIBA-GEIGY AG**
**Klybeckstrasse 141**
**CH-4002 Basel (CH)**

(72) Inventor : **Robertson, J. Richard**
**3415 Aubusson Trace**
**Alpharetta Georgia 30201 (US)**
Inventor : **Su, Kai Chiang**
**13090 Hopewell Road**
**Alpharetta Georgia 30201 (US)**

**EP 0 330 616 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to ophthalmic devices, such as contact lenses and intraocular implants, and particularly contact lenses of a block copolymer containing polysiloxane and polyoxyalkylene oxide units possessing an advantageous blend of desirable properties including a) high oxygen permeability, b) good wettability, c) flexibility and d) optical clarity, in the ocular environment of use as claimed in Claim 1, to a polymer as claimed in Claim 39 and to the use of this polymer for the manufacture of an ophthalmic device as claimed in Claim 50.

The use of siloxane containing materials of various types in the fabrication of ophthalmic devices is well known.

Thus, in U.S. 3,996,187 ; 3,996,189 ; 3,341,490 and 3,228,741 there are described contact lenses fabricated from poly (organosiloxanes) containing fillers. While such lenses are generally soft and of high oxygen permeability, the use of fillers such as silica, is indicated in order to increase the otherwise generally poor tear strength and tensile strength. Also, such silicone rubber lenses are characteristically both hydrophobic and lipophilic.

U.S. 3,808,178 discloses hard contact lenses fabricated from copolymers of a polysiloxanylalkyl acrylate or methacrylate ester and an alkyl acrylate or methacrylate ester. The monomers and polymers of the patent are hydrophobic and are incompatible with hydrophilic materials such as hydroxyethyl methacrylate. While the disclosed lenses have increased oxygen permeability, they are rigid.

U.S. 4,136,250 discloses hydrogels of a copolymer of about 20 to about 90% of a hydrophilic (or mixture of hydrophilic and hydrophobic) monomer and about 10 to about 80% of a polyolefinic siloxane macromer which can be used to fabricate a contact lens. Typically, such hydrogels are recited to possess a degree of swelling of about 10 to about 12%. It has been found, however, that the presence of substantial amounts of water in such hydrogels limits the oxygen permeability of such materials.

U.S. 4,153,641 relates, in relevant part, to contact lenses fabricated from a polymer of a polyorganosiloxane terminated with vinylic groups, or copolymers thereof with other monomers. The exemplified products therein are hydrophobic in nature.

U.S. 4,486,577 relates to copolymers of about 8 to 70% of a polysiloxane macromer containing at least two vinyl groups and 30-92% on a monomer which is at least predominantly water insoluble to make polymers useful, for example, as contact lenses.

Generally, such prior art contact lens compositions are either insufficiently hydrophilic in terms of surface wettability to be acceptable to the contact lens profession, even though they may possess high oxygen permeability, or such contact lenses are of acceptable wettability but the hydrophilicity is coupled with water swellability, which tends to limit optimum oxygen permeability.

It is an object of the present invention to overcome these and other disadvantages of the art by providing ophthalmic devices, such as contact lenses and corneal implants, possessing a high degree of surface wettability and possessing a high degree of oxygen permeability in the aqueous environment of use by employing a crosslinked block polymer containing polysiloxane and polyalkylene oxide units.

A further object of the invention is to provide a method of correcting visual defects in the form of refractive errors by fitting to the patient's eye in need of the same a corrective contact lens of such polymer. These and other objects of the invention are apparent from the following detailed description of the invention.

One embodiment of the present invention relates to an optically clear, hydrolytically stable, biologically inert, wettable, flexible, oxygen permeable ophthalmically acceptable polymer and a device, such as a contact lens, having at least 10% water content when swollen in its environment of use, which is fabricated from a crosslinked polymer of a reactive monomer having a segment S″ of the formula Ia,

$$-(W-S'-L-D-A-L)_{a}- \qquad (Ia)$$

wherein a is 1 to 10 ;
each D is independently oxygen or $-N(R^9)-$ ;
each W is a single bond, oxygen or $-N(R^9)-$ ;
each S′ is independently a segment of formula II,

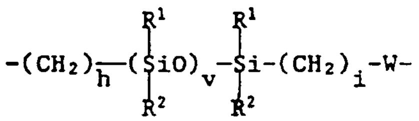 (II)

each h and i is an integer from 1 to 6, v is an integer from 2-300, preferably 2 to 75, more preferably 2 to 50, even more preferably 10 to 50, most preferably 15 to 50 ;

$R^1$ and $R^2$ are independently alkyl of up to 18 carbon atoms, or aryl of up to 12 carbon atoms, preferably lower alkyl or phenyl, most preferably methyl ;

each L is independently –BRB′–, –BR–, –RB′– or –R– ;

each of B and B′ is selected from

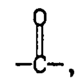, 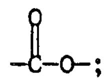; and 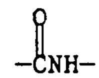

with the carbonyl group being bound to A, S′, D or P′ ;

each R is independently a divalent linking group selected from

a) a divalent aliphatic group, preferably alkyl, alkenyl or alkynyl, of up to 25 carbon atoms which may be interrupted by oxy, carbonyloxy, amino, aminocarbonyl, oxycarbonyl, ureido, oxycarbonylamino, or carbonylamino ;

b) a divalent 5-7 membered cycloaliphatic group having 5 to 25 carbon atoms and a divalent 5-7 membered cycloaliphatic $C_1$-$C_{20}$ aliphatic group ;

c) a divalent arylene group having 6-25, preferably 7-15 carbon atoms ; and

d) a divalent aralkyl or alkaryl group having 7 to 25, preferably 8-16 carbon atoms ;

e) a divalent alkylene-aryl-alkylene having 8 to 30 carbon atoms, preferably 8 to 16 carbon atoms, wherein groups b), d) and e) can be optionally interrupted in the non-cyclic portions thereof by the same groups as in group a) and wherein the aryl rings in groups c), d) and e) may be further substituted with one or more substituents selected from halogen, preferably fluorine or chlorine, $C_1$-$C_4$ alkyl, preferably methyl, and $C_1$-$C_{12}$ perhalo alkyl, especially $C_1$-$C_{12}$ perfluoro alkyl ;

and each A is independently a polymeric block of poly-$C_2$-$C_6$-oxyalkylene of the formula III,

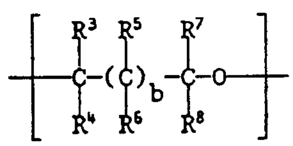 (III)

of which preferably at least 30%, more preferably at least 50%, still more preferably at least 75%, most preferably 100% of the A blocks within any one polymer are

a) homopolymers of oxyalkylene having no more than 15 oxyalkylene units, preferably no more than 10 units, more preferably no more than 7 units, most preferably no more than 4 units or

b) block copolymers of oxyalkylenes having homopolymeric subblocks of no more than 15 oxyalkylene units, preferably no more than 10 units, more preferably no more than 7 units, most preferably no more than 4 units per subblock ;

each A group having a total of from 1-1000 oxyalkylene units, in which formula b is independently zero to 4, preferably zero or one, the terminal oxygen within each unit of formula III being replaceable by $-NR^9-$, each $R^3$, $R^4$, $R^7$ and $R^8$ is independently selected from the group consisting of hydrogen, halogen (preferably fluorine or chlorine, more preferably fluorine), an aliphatic, aromatic or heterocyclic radical selected from : unsubstituted $C_1$-$C_{16}$ alkyl ; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$, preferably $C_1$-$C_8$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon

atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom ; $R^3$, $R^4$, $R^7$ and $R^8$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above ;

each $R^5$ and $R^6$ are selected from the same group set forth above for $R^3$ ; and $R^5$ and $R^6$ are further independently selected from $C_1$-$C_{16}$ alkoxycarbonyl, $C_2$-$C_{16}$ alkanoyloxy, $C_2$-$C_{16}$ alkenyloxycarbonyl, and $C_3$-$C_{16}$ alkenoyloxy, each of which is unsubstituted or substituted by fluoro, aryl of up to 10 carbon atoms, or $C_1$-$C_{16}$ alkoxy, and $R^5$ and $R^6$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having an oxygen atom as its link to the rest of the molecule may not be a substituent on the same carbon atom which is singly bonded to another oxygen atom ; in addition, 2 adjacent groups, selected from $R^3$ to $R^6$, together with the atoms to which they are attached may form a 5-8 membered cycloalkyl, 5-8 membered oxacycloalkyl or bicycloalkyl ring ; and each $R^9$ is independently selected from hydrogen, $C_1$-$C_4$ alkyl and phenyl, and is preferably hydrogen.

The monomer preferably has segments of formula Ib,

$$-(D-A-L-S'')_c- \qquad (Ib)$$

or of formula Ic,

$$-(S'')_c-D-S'-La- \qquad (IC)$$

even more preferably said monomer is of formula I,

$$L'-[(D-A-L)_e-S'']_c-L'' \qquad (I)$$

and more preferably said monomer being divinylic ; wherein D, A, L, S', S″ are as defined hereinbefore ; and especially the terminal L group within S″ is –BR– when e is one ; and wherein c is 1 to 10 ; e is zero or one ; a times c is 1 to 10 ; La is selected from –BRB′– and –BR– ; L′ is hydrogen, P′–R–, P′–RB′–, P′–BR– or P′–BRB′– ; and L″ is hydrogen, or –P′, or, in case that e is zero, also –D-S′-La-P′ ;

and P′ is hydrogen, amino, hydroxy, NCO, NCS, vinyl or a moiety containing a crosslinkable group which may be crosslinked when coreacted with a suitable crosslinking agent or when irradiated by actinic radiation.

Each A group can have from 1 to 1000 oxyalkylene units, preferably 1-200, more preferably 1-150 units, still more preferably 1-100 units, yet more preferably 1-75 units, most preferably 1-50 units.

Two most preferable embodiments are when at least 30% of the A groups in the polymer consist of 32% and 35% polyethylene glycol and 68% and 65%, respectively of polypropylene glycol, the polyethylene glycol blocks being of no more than three repeating units each and the polypropylene glycol blocks being of no more than seven repeating units each.

In the foregoing, all alkyl groups whether mentioned alone or as part of another group are preferably $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Preferably alkenyl groups, whether alone or as part of another group, are $C_2$-$C_4$ alkenyl, such as ethenyl, propenyl and butenyl. Preferred aryl groups (whether alone or as part of another group) are phenyl and naphthyl, more preferably phenyl. Preferably the aryl groups are still further substituted by $C_1$-$C_4$ alkyl, more preferably t-butyl, most preferably in the para position. Halogen may be chloro, bromo, iodo or fluoro.

Preferably each b is independently 0-3, more preferably 0-2, most preferably 0 or 1. While the group identified by formula I may be highly halogenated, it is preferably at least 25% halogen free, more preferably 30%, still more preferably 40%, and most preferably substantially halogen free. Wherever cyclo groups are indicated, whether carbocyclic or heterocyclic they preferably have 5-6 ring members and the heterocyclics preferably have only carbon atoms and an oxygen atom as ring members.

Bicycloalkyl is understood to cover those groups when two adjacent R groups in a segment of formula III together form a ring and one of them already is a cycloalkyl group. In other words a fused ring system made up of two geminal R groups and the carbon atom to which they are attached results. For example if $R^3$ is cyclopropyl and $R^4$ is methyl then $R^3$ and $R^4$ together with the carbon to which it is attached could be (2, 1, 0) cyclopent-2,2-diyl.

In formula I, when b is greater than one, each of the multiple $R^5$ and $R^6$ groups may be the same of different; however preferably all of the $R^5$ groups are the same and all of the $R^6$ groups are the same.

In one aspect of the invention, each of $R^3$-$R^7$ in a single oxyalkylene unit are the same. Preferably in a portion of the oxyalkylene units $R^3$-$R^7$ are all hydrogen. Preferably the substituent $R^8$ is alkyl of up to 16 carbon atoms ; alkyl of up to 16 carbon atoms substituted by alkoxy of up to 8 carbon atoms, or fluoro ; phenyl which is unsubstituted or substituted by fluoro, alkoxy of up to 6 carbon atoms or alkyl of up to 6 carbon atoms ; benzyl wherein the phenyl ring thereof is unsubstituted or substituted by fluoro, alkoxy of up to 6 carbon atoms or alkyl of up to 6 carbon atoms ; cyclohexyl ; or oxacycloalkyl of 4 or 5 ring carbon atoms.

A highly advantageous subembodiment relates to wettable, ophthalmic devices, preferably contact lenses, fabricated from a polymer of formula I or having segments of formula Ia, wherein A is of the formula IV,

$$-\left[-[CH_2-(CH_2)_b-\overset{R^{10}}{\overset{|}{C}}H-O]_x-[CH_2-(CH_2)_f-\overset{R^{11}}{\overset{|}{C}}H-O]_z-\right]_q$$

IV

wherein b and f are each independently 0-4, preferably 0 or 1, but not the same, (x + z) times q within any one A is 1-1000, preferably 1-200, more preferably 1-150, still more preferably 1-100, yet more preferably 1-75, and most preferably 1-50 ; each of x and z being 1-15, preferably 1-10, more preferably 1-7, most preferably 1-4 ; and $R^{10}$ and $R^{11}$ being selected from the same group as is $R^8$. There are two very highly advantageous embodiments having formula IV which are represented by either formula V

$$-\left[-[(CH_2)_n-\overset{R^{10}}{\overset{|}{C}}H-O]_x-[(CH_2)_p-CH_2-O]_z-\right]_q \qquad (V)$$

wherein n is b + 1 ; p is f + 1 ; n and p each independently being preferably 1-3, more preferably 1 or 2, most preferably 1 ; and x, z and q are as defined above ; $R^{10}$ is an aliphatic, aromatic, or heterocyclic radical, preferably alkyl of up to 6 carbon atoms, alkyl of up to 6 carbon atoms substituted by alkoxy of up to 6 carbon atoms or fluoro ; phenyl which is unsubstituted or substituted by fluoro, alkoxy of up to 6 carbon atoms or alkyl of up to 6 carbon atoms ; benzyl wherein the phenyl ring thereof is unsubstituted or substituted by fluoro, alkoxy of up to 6 carbon atoms or alkyl of up to 6 carbon atoms ; cyclohexyl or oxacycloalkyl of 4 or 5 ring carbon atoms; or which are represented by formula VI

$$-\left[-[(CH_2)_n-CH_2-O]_x-[(CH_2)_p-\overset{R^{12}}{\overset{|}{C}}H-O]_z-\right]_q \qquad (VI)$$

wherein n, p, x, z and q are as defined above for formula V and $R^{12}$ is preferably selected from the same group

as $R^8$ in formula V.

In the foregoing it is to be understood that the units of x and z may be positioned randomly, in block segments, or alternately.

Free hydroxy groups on the outer surfaces of the formed polymer are aceptable as they increase wettability without drawing water into the polymer matrix. However, it is preferable to have as few free hydroxy groups in the finished polymer as practical if a contact lens having high oxygen permeability is to be prepared. A suitable means of tying up the free hydroxy groups present would be to interact them with a color group. Typical color groups useful in these embodiments include, but are not limited to, the hydroxy-reactive dyes known in the art under the tradename Remazol, manufactured by American Hoechst. Examples of the Remazol dyes which are especially useful are :

| Dye | Color Index Code |
|---|---|
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$$-SO_2\text{-}CH_2CH_2O\text{-}SO_3^{\ominus}$$

which reacts with the polymer or monomer hydroxy group to yield a

$$dye\text{-}SO_2\text{-}CH_2\text{-}CH_2\text{-}O\text{-}polymer$$

or

$$dye\text{-}SO_2\text{-}\overset{CH_3}{\overset{|}{C}}H\text{-}O\text{-}polymer$$

group, preferably the former. In such a manner, both excess free hydroxy groups are disposed of and colored contact lenses can be realized simultaneously. The color group or former can be reacted with monomer before the monomer is incorporated into the structure of formula I or afterwards. Another means of disposing of these excessive hydroxy groups is to utilize their presence to form various degrees and types of crosslinking.

When polymers resulting from monomers having segments of formula Ia or of formula I polymerized or copolymerized in the absence of hydrophilic monomer, as defined below, have a water content greater than at least 10% they can be utilized as is. However, such non-hydrophilic modifying monomer containing polymers having a fully swollen water content of less than 10% are not suitable and must be modified by a hydrophilic modifier.

Such compounds of formula I or compounds having segments of formula Ia are modified by reacting them with or polymerizing them with a coreactive or copolymerizable hydrophilic modifier. The hydrophilic modifier may be introduced by being coreactive with a functional group present in one or more of $R^3$-$R^8$ and/or with a functional group within L′ and/or L″. When the hydrophilic modifier is monofunctionally reactive (other than a vinylic unsaturation), it merely modifies the polymer properties and terminates a chain or sidechain at that point. When the hydrophilic modifier is di- or polyfunctionally reactive, i.e. contains more than one coreactive functional group or at least one coreactive vinylic group, the modifier can also act as a copolymerizable monomer and/or crosslinking agent. However, the hydrophilic modifier need not be the only crosslinking agent, nor need it be the only copolymerizable monomer present. When other such agents are employed any of the conventional crosslinking agents and coreactive monomers may be used in minor amounts.

In any event, the polymer resulting from the polymerization of the monomer of formula I should not be

crosslinked in excess of 25%, preferably not in excess of 20%, more preferably not in excess of 15%, still more preferably not in excess of 10%, even still more preferably not in excess of 5%, and most preferably in the range of 2-3%.

The purpose of the hydrophilic modifier is to maintain the water content of the resulting polymer to at least 10% when swollen in its normal environment of use. For those polymers which absent the hydrophilic modifier already meet this limit, its purpose is to increase the water content of the polymer material over that when the hydrophilic modifier is absent. However, if the polymer, without the hydrophilic modifier, is sufficiently hydrophilic, i.e. the water content is at least 10%, it need not be present, but preferably is. Whether the hydrophilic modifier is needed or not, and the amount which is needed, is dependent upon the polymer water content and other hydrophilic properties desired.

Usually, when present, a vinylic hydrophilic comonomer is used in an amount of about 2% to about 10% by weight of the resultant polymer. Advantageously, no more than 5% of vinylic hydrophilic comonomer is used when the compound of formula I has a molecular weight in excess of 8000. Generally, when the compound of formula I has a molecular weight of under about 4000, up to 10% by weight of vinylic comonomer can be used. When the compound of formula I has a molecular weight between 4,000 and 8,000, the maximum amount of vinylic comonomer is between 5% and 10% by weight.

In addition to the hydrophilic modifier, other comonomers which may be present in the polymer are monomers coreactive with the monomer of formula I exclusive of monomers which are hydrophilic modifiers. Such additional monomers may be present in a minor amount of up to about 20% by weight of the resultant polymer. When such comonomers are excessively hydrophobic, additional hydrophilic modifier may be incorporated so as to achieve the appropriate water content.

The hydrophilic modifier is a monomer which is coreactive with a monomer of formula I or having units of formula Ia and is typically selected from

aa) polyethylene glycols of the formula

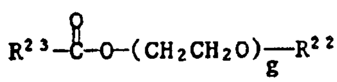

(A)

or ab) pyrrolidones of the formula

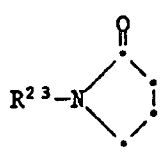

(B)

wherein $R^{22}$ is hydrogen or $C_1$-$C_7$ alkyl, preferably $C_1$-$C_4$ alkyl, g is an integer of from 1-25,

or ac) a compound of the formula

$$(R^{24}\text{-div})_{nz}Hy \quad (C)$$

wherein $R^{23}$ is a polymerizable or reactive moiety selected from i) ethylenically unsaturated radicals, preferably vinyl, 1-methylvinyl, 2-methylvinyl, or allyl, ii) anhydrides, iii) amines, iv) acids, v) esters, vi) amides, vii) ethers, viii) acid halides, $R^{24}$ is selected from the meanings given for $R^{23}$ and ix) epoxy groups, especially glycidyl, x) isocyanates and isothiocyanates and xi) hydroxy ;

div is selected from

ba) a divalent aliphatic group of up to 25 carbon atoms, preferably alkyl, alkenyl or alkynyl, which may also be interrupted, or terminated, or interrupted and terminated by oxy, carbonyloxy, amino, aminocarbonyl, oxycarbonyl, ureido, oxycarbonylamino, or carbonylamino ;

bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;

bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an

interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl ;

be)

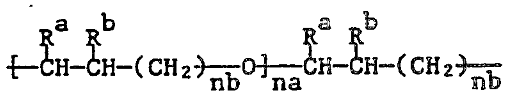 (D)

wherein na is an integer of 8-100 ; and

bea) $R^a$ is hydrogen, $R^b$ is methyl, and nb is zero ; or

beb) $R^a$ is methyl, $R^b$ is hydrogen, and nb is zero ; or

bec) $R^a$ and $R^b$ are hydrogen and nb is one ;

nz is an integer of 1 up to the valence of Hy and where nz is less than the valence of Hy, the remaining valences of Hy are taken up with hydrogens ;

and Hy is a hydrophilic group selected from

ca) morpholino ; cyclic amide radicals of 5-7 ring members ; saturated and unsaturated cyclic, N,N-diamide radicals of 5-6 ring members ; groups of the formula

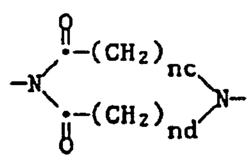 (E) or 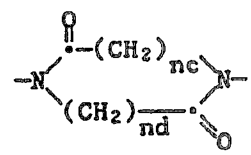 (E')

having 6-7 ring members wherein nc and nd are selected from 0-2 ; and cyclic amines of 5-6 ring members; each unsubstituted or substituted by hydroxy-$C_1$-$C_5$ alkyl, carboxy, or lower alkyl ;

cb) tetrahydrofurfuryl ;

cc) mono-, di-, and polysaccharide radicals, whether straight chain or cyclic, their corresponding sugar alcohol radicals, pentaerythritol radicals, and polyvinyl alcohol radicals ;

cd) polyhydroxy $C_2$-$C_7$ alkyl radicals.

Other suitable hydrophilic modifiers which may be used are disclosed in copending application HYDROPHILIC MODIFIER MONOMERS by Frank Molock, Richard Robertson and Kai Su.

When P′ is

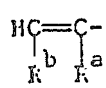

with $R^a$ and $R^b$ as defined below or contains such a group

(e.g. 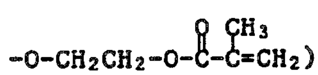),

then the monomer of formula I can be crosslinked in the presence or absence of up to less than about 50%, preferably up to about 30%, most preferably up to about 10% by weight of other vinylic comonomers, provided that such comonomers are substantially free of hydroxy groups in the final product. $R^a$ and $R^b$ are each independently hydrogen, methyl or cyano.

When P′ does not have a vinylic group, but takes part in crosslinking, P′ contains e.g. an active hydrogen. In such cases, P′ preferably terminates in an OH, $NHR^c$ ($R^c$ being hydrogen or lower alkyl), a leaving group bound directly to the B or B′ carbonyl, a conventional acyl leaving group when not so bound, SCN– or OCN–. Crosslinking is then typically carried out by condensation or addition with a di- or polyfunctional coreactive monomer. For example, when P′ is OH, then the coreactive monomer functional group can be $-NHR^c$, –COOH, OCN–, SCN–, etc. ; when P′ is $NHR^c$, the reactive comonomer functional group can be a conventional acyl, or acyl bound to a conventional leaving group ; and when P′ has OCN– or SCN–, then the reactive comonomer

functional group can be OH. Similarly, the other coreactive functional groups mentioned in terms of either P′ or the coreactive monomer can be interchanged (those mentioned as part of P′ being on the coreactive monomer and those mentioned as part of the coreactive monomer being part of P′).

Suitable vinylic comonomers and coreactive monomers for condensation are set forth below. However, the list is not exhaustive and those of ordinary skill will appreciate the modifications, additions, and alternatives which may also be employed.

When either or both L′ and L″ are hydrogen, or terminate in P′ with P′ being hydrogen, at least one additional crosslinkable moiety must be present as one of, or as substituent on one of, the groups $R^3$-$R^8$. Such crosslinkable groups may also be present as a substituent on or in place of one or more of $R^3$-$R^8$ even when both of L′ and L″ have crosslinkable groups therein. However, the degree of crosslinking in the finished crosslinked polymer should not exceed 10%, preferably not more than 5%, more preferably be in the range of 1-4%, most preferably in the range of 2-3%.

Within the polymer fabricated from monomers of formula I, not more than 20-70%, preferably not more than 50% of the A groups are polyethylene glycol.

The number of A units and the chain length and nature of the substituents on the polyoxyethylene segment is determined by the degree of wettability desired in the polymer of the compound of formula I. In general, the polymer should be sufficiently hydrophilic in its surface properties such that the polymer exhibits a contact angle with distilled water at 20°C of less than 60°, preferably less than 40°, more preferably less than 25°, still more preferably less than 15°, most preferably less than 10°.

The greater the number of siloxane units, the greater the number of oxyalkylene units is generally required to reduce the contact angle to within the above limits.

Further, a large excess of unsubstituted oxyethylene units is to be avoided, as such excess units tend to cause the polymer to be more swellable. As water is taken up, the oxygen permeability of the polymers tends to be drastically reduced.

Preferred crosslinked polymers are those consisting essentially of a polymer of a divinylic monomer according to formula I wherein $R^1$ and $R^2$ are methyl, h and i are 2 to 4, v is 2-20 ; A is of formula IV wherein b is zero; each $R^{10}$ and $R^{11}$ is independently alkyl of up to 8 carbon atoms, (x + z) multiplied by q is 4-40 ; and P′ is :

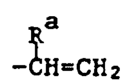

with $R^a$ being hydrogen or methyl.

Very highly advantageous are those polymers of reactive vinylic monomers of the formula VII,

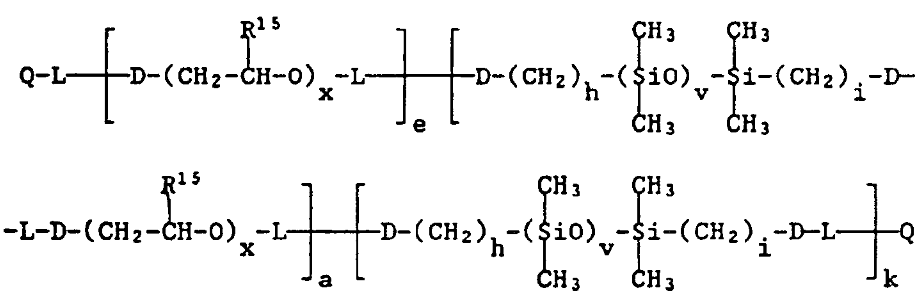
(VII)

where Q is

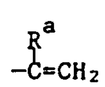

and L is B-R-B′ or B-R,
one of e and k is one and the other zero ; $R^a$ is hydrogen or methyl ;
each R is a divalent arylene group of 6 to 15 carbon atoms, a divalent $C_6$-$C_{10}$-arylene-amino carbonyloxy-$C_2$-$C_6$ alkylene ;

or divalent $C_3$-$C_{15}$ cycloaliphatic ;
B and B′ are each

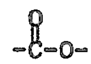

or

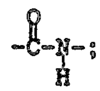

each $R^{15}$ is alkyl of 1 to 6 carbon atoms, or mixtures thereof with units wherein $R^{15}$ is hydrogen, preferably with the proviso that $R^{15}$ can be hydrogen in no more than about 75%, more preferably 50%, still more preferably no more than 30%, of any one unit ;
each x is 4-200, preferably 4-75, preferably 6-70, more preferably 8-66 ; v is 2-66, preferably 2-25, more preferably 2-20 ; i and h are independently 2, 3 or 4 ; and a is an integer of 1-10, preferably 1-8, more preferably 1-6, still more preferably 1-4, most preferably 1-2.

Within this very highly advantageous embodiment, $R^a$ is most preferably methyl ; L is most preferably BRB′, R is most preferably -phenylene-, -phenylene-substituted by methyl, $-CH_2CH_2OCONH$-phenylene– or $-CH_2CH_2OCONH$-tolylene– ; $R^{15}$ is methyl, x is most preferably 60 to 66 ; v is most preferably 15 to 20 ; a is most preferably 1 to 3 ; k is most preferably zero ; and e is most preferably one. Alternatively within this embodiment, k is one and e is zero.

A very highly preferred embodiment are those polymers from monomers of formula VII wherein each

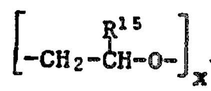 -group :

is of the formula

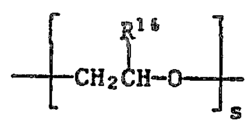

where $R^{16}$ is alkyl of 1 to 4 carbon atoms, most preferably methyl, and s is from about 6 to about 200, preferably from about 25 to about 100, and most preferably from about 50 to about 75.

Also highly preferred are those polymers of monomers of formula VII wherein each

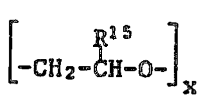

group is of the formula VIII

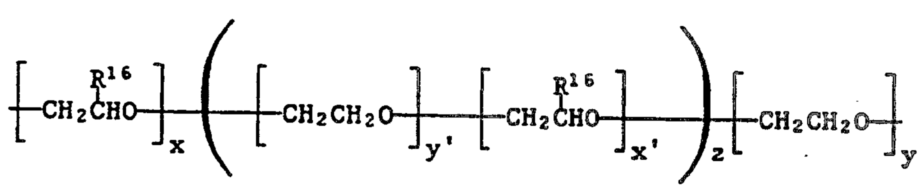 (VIII)

wherein one of x and y is zero and the other and y′ and x′ are independently 1-20, and z is a number such that

$x + y + zy' + zx' = 4$ to 1000.

The reactive vinylic monomers of formula I can characteristically be polymerized to form crosslinked polymers under conventional polymerization conditions.

If desired, the monomer reaction mixture may contain a catalytic amount of a conventional polymerization catalyst, preferably a free radical catalyst. Of particular interest are conventional peroxide and azo catalysts, such as hydrogen peroxide, benzoyl peroxide, tert-butyl peroctoate, benzoyl peroxide or azobis(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

Minor amounts i.e. less than 50%, preferably up to 30%, and most preferably up to no more than about 10% by weight, of conventional copolymerizable vinyl monomers other than hydrophilic modifiers, can be employed as extenders or the like, in the preparation of the instant polymer, as copolymer constituents. However, if the total hydrophilic modifier content ist within the foregoing limits, the hydrophilic modifiers can also be used as such extenders. Suitable vinyl monomers include :
acrylates and methacrylates of the general formula

$$H_2C=\overset{R^{34}}{\overset{|}{C}}-COOR^{35}$$

where $R^{34}$ is hydrogen or methyl and $R^{35}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy of 2 to about 100 units ; acrylamides and methacrylamides of the general formula

$$H_2C=\overset{R^{34}}{\overset{|}{C}}-CONHR^{35}$$

where $R^{34}$ and $R^{35}$ are as defined above ;
vinyl ethers of the formula

$$H_2C=CH-O-R^{35}$$

where $R^{35}$ is as defined above ;
vinyl esters of the formula

$$H_2C=CH=OOC-R^{35}$$

where $R^{35}$ is as defined above ;
maleates and fumarates of the formula

$$R^{35}OOC-HC=CH-COOR^{35}$$

where $R^{35}$ is as defined above ;
and vinylic substituted hydrocarbons of the formula

$$R^{34}CH=CHR^{35}$$

where $R^{34}$ and $R^{35}$ are as defined above.

Useful monomers include, for example :

methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides ;

dimethylfumarate, dimethylmaleate, diethylfumarate, methyl vinyl ether, ethoxyethyl vinyl ether, vinyl acetate, vinyl propionate, vinyl benzoate, acrylonitrile, styrene, alphamethyl styrene, 1-hexene, vinyl chloride, vinyl methyl ketone, vinyl stearate, 2-hexene and 2-ethylhexyl methacrylate.

Most preferably, the instant polymers are free from copolymer units of such conventional vinyl monomers which are not hydrophilic modifiers.

The vinylic monomers of formula I can be prepared by methods known, per se.

For example, the siloxane/polyalkylene oxide containing divinylic monomers of formula I may be prepared by reacting a siloxane diol of the formula HO-(S')-H, wherein –S'– is a group of the formula II as defined hereinbefore with a sufficient amount of a difunctional reactive group containing compound having the group –X– or –X-Y–, wherein the difunctional reactive groups are isocyanate ; activated carboxy, such as an anhydride, an acid halide or a carboxy ester ; or is a leaving group, such as a halide, sulfato or the like, to form the corresponding reactive group containing endcapped derivative.

The resulting endcapped siloxane derivative can then be reacted with a polyoxyalkylene diol of the formula HO-(A)-H, wherein –A– is a group of the formula III above to form the corresponding polyoxyalkylene-siloxane-polyoxyalkylene diol. This diol can then be reacted with a reactive group containing vinylic monomer having the terminal $H_2C=C(R^a)$-L-moiety, wherein the reactive group is an isocyanate ; activated carboxy, such as an anhydride, an acid halide or carboxy ester, or is a leaving group such as halo, sulfato or the like to form the corresponding divinyl derivative where a is 1. Alternatively, the aforementioned polyoxyalkylene – siloxane – polyoxyalkylene diols can be further sequentially reacted with a further difunctional reactive group containing compound having the group –BR– or –BRB'-D– to form the corresponding di-functional reactive endcapped derivative which is then reacted with a siloxane diol of the formula HO-(S')-H. One may continue building up alternative polyoxyalkylene/siloxane unit containing diols in this manner, corresponding to the value of c being either (a plus e) or (a plus k). Then this diol may be endcapped with a reactive group containing vinylic monomer having a terminal $H_2C=C(R^a)$-L- moiety or the diol reacted with a sufficient amount of difunctional reactive group containing compound to endcap the diol with a reactive group, such as eg. an isocyanate, etc. group which is then reacted with the appropriate vinylic containing compound, such as a vinylic amine or alcohol, or other copolymerizable monomer having a crosslinkable group to obtain the corresponding product of formula I.

Of course, instead of starting with a siloxane diol of the formula HO-(S')-H and building up the alternating sequence to the desired value of "a", one may instead begin with a polyoxyalkylene diol of the formula HO-(A)-H and, after endcapping the same with difunctional reactive groups, condense the same with the siloxane diol until the desired value of "e" is attained, and terminate the diol with vinylic groups as described above.

The above reactive vinylic monomers are characteristically polymerized under conventional polymerization conditions with or without a hydrophilic modifier of formula C or a mixture of a hydrophilic modifier of formula C and a copolymerizable monomer. In those vinylic monomers containing but one vinyl group, a minor amount e.g. from about 0.01 to about 5 weight percent, based on the monomer of formula I, of a conventional crosslinking agent, may be employed. Suitable crosslinking agents include diolefinic monomers such as :

Allyl acrylate and methacrylate, alkylene glycol and polyalkylene glycol diacrylates and dimethacrylates, such as ethyleneglycol dimethacrylate, diethylene glycol dimethacrylate, and propylene glycol dimethacrylate; trimethylol propane triacrylate ; pentaerythritol tetraacrylate, divinylbenzene ; divinyl ether ; divinyl sulfone ; bisphenol A diacrylate or dimethacrylate ; methylene bisacrylamide ; diallyl phthalate ; triallyl melamine and hexamethylene diacrylate and dimethacrylate. Also, such minor amounts of a crosslinking agent may be employed, if desired, in the polymerization of the di-vinyl monomer of formula I and VII.

When the monomers of formula I have free hydroxy, isocyanato, carboxylic or amine groups, suitable crosslinking agents contain di- or polyfunctional co-reactive groups to form addition or condensation reactions linking 2 or more chains.

If desired, the monomer reaction mixture may contain a catalytic amount of a conventional catalyst, preferably a free radical catalyst. Of particular interest are conventional peroxide and azo catalysts, such as hydrogen peroxide, benzoyl peroxide, tert-butyl peroctoate, benzoyl peroxide or azobis (isobutyronitrile).

The aforementioned reactions are generally straight forward additions or condensations and are typically conducted at a reaction temperature between about –10°C and about 100°C, depending upon the relative reactivity of the species involved, in the presence or absence of an inert diluent and in the optional presence of an addition or condensation catalyst if desired or appropriate. For reactions involving an isocyanate or acid halide, with a diol, for example, suitable optional catalysts include pyridine and triethylamine.

In a further subembodiment, the ophthalmic device, preferably contact lens, is fabricated from a polymer consisting essentially of an addition product of a monomer of formula I in which L′ and L″ are other than ethylenically unsaturated and

a1) a monomer of formula F

$$(E^1)_t\text{-}G^1, \quad (F)$$

wherein t is an integer of 2 to 4 ;

$G^1$ is an aliphatic, aromatic, araliphatic carbocyclic or heterocyclic residue having a valency corresponding to the value of t and containing up to about 24 carbon atoms, or, where t is 2, may also represent a divalent group of the formula

$$-Y^1-D-(A-L-D)_{w}-A-Y^1- \quad ;$$

wherein A, L and D are as defined above, w is a number from 0 to 8, $Y^1$ is a divalent aliphatic group of up to 14 carbon atoms which may be interrupted by oxy, carbonyloxy, amino, aminocarbonyl, oxycarbonyl, ureido, oxycarbonylamino or carbonyl ; a divalent aliphatic hydrocarbylcarbonyl or -aminocarbonyl group of up to 14 carbon atoms and wherein the carbonyl group thereof is covalently bonded to the adjacent oxygen or $-N(R^9)-$ moiety ; a divalent 5 to 7-membered cycloaliphatic group of from 5 to 14 carbon atoms; a divalent arylene group of 6 to 14 carbon atoms ; a divalent aralkyl or alkaryl group of 7 to 14 carbon atoms; a divalent 5 to 7-membered cycloaliphatic-carbonyl or -aminocarbonyl group of from 6 to 15 carbon atoms, wherein the carbonyl group thereof is covalently bonded to the adjacent oxygen or $-N(R^9)-$ moiety ; or a divalent arylene-, aralkyl- or alkaryl-carbonyl or -aminocarbonyl group wherein the arylene group is of 6 to 14 carbon atoms, the aralkyl or alkaryl group is of 7 to 14 carbon atoms, and the carbonyl group is covalently bonded to the adjacent oxygen or $-N(R^9)-$ moiety ; or $Y^1$ is a direct bond where $E^1$ is hydrogen ;

$E^1$ is hydrogen, hydroxy or amino, isocyanato or isothiocyanato ; and $E^1$ is coreactive with L′ or L″ ; or

a2) a hydrophilic modifier of formula C having a residue $R^{24}$ which is selected from hydrogen, hydroxy, amino, isocyanato and isothiocyanato and which is coreactive with L′ or L″, or

a3) a mixture of a compound of formula F and formula C.

Advantageously, in order to insure adequate crosslinking, in one subembodiment there is employed at least a minor amount of those compounds wherein t is 3, for example at about 0.2% by weight based upon the amount of compound of formula I employed. Generally, a stoichiometrically equivalent amount of the compounds of formula I and F is combined ; however a slight excess of di- or polyisocyanate or -isothiocyanate may be employed to insure sufficient crosslinking to maintain dimensional stability in the product. As a further alternative, additional conventional crosslinking agents may be employed to insure sufficient crosslinking such that the product maintains dimensional stability. Thus, in addition to the compounds of formula I and F and C, there may also be added to the reaction mixture a minor amount, e.g. up to about 5 weight percent, of a conventional di-isocyanate or tri-isocyanate such as toluene diisocyanate, isophorone diisocyanate, 4,4′-methylenebis(phenyl isocyante), methylenebis(cyclohexyl isocyanate), melamine tri-isocyanate, and the like. Alternatively, where a stoichiometricexcess of isocyanate is employed in the reaction of C, I and F, a minor amount, e.g. up to about 5 weight percent, of a di- or a polyfunctional amine or hydroxylated crosslinking agent may be employed. Suitably such cross-linking agents include, for example ethylene glycol, glycerin, diethylene glycol, ethylene diamine, ethanolamine, triethanolamine, diethanolamine and the like.

The addition reaction between the compounds of formula C, I and formula F and any additional crosslinker can be conducted under conditions known, per se. Thus, the compounds may be simply admixed, in the presence of an inert diluent if necessary or desired, at a reaction temperature between about 0°C and about 100°C, preferably between about 20°C and 80°C, optionally in the presence of a condensation catalyst, such as triethyl amine or di-n-butyltin diacetate.

In the preparation of ophthalmic devices, such as contact lenses, the reaction mixture may be cast directly in the shape of the lens, or the polymerization may be carried out in a mold having a shape convenient for further processing, such as the shape of a small cylinder or "button", which can then be machined.

The compounds of the formula C and F are either known or can be prepared by methods which are known, per se.

The compounds of formula C are more fully described in a concurrently filed U.S. patent application entitled HYDROPHILIC MODIFIER MONOMERS, invented by Frank Molock, Richard Robertson and Kai Su.

The siloxane diols of the formula HO-(S')-H are known in the art and many are commercially readily available.

Also, the polyoxyalkylene diols of the formula HO-A-H are known or can be prepared by known methods.

Thus, the polyols of the formula HO-A-H are generally prepared by the addition reaction of an epoxide of the formula IX,

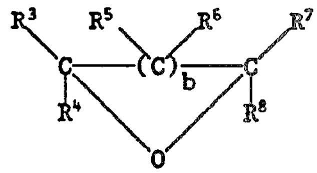

(IX)

where $R^3$-$R^8$ and b are as defined above, with another epoxide of the formula X,

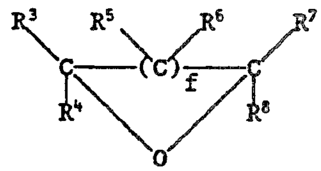

(X)

where $R^3$-$R^8$ and f are as defined above, optionally in the presence of a conventional alkylation catalyst, at atmospheric to elevated pressures of up to about 3000 kPa gauge, at temperatures between 0°C and about 130°C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols terminating in the group D.

The reaction between the epoxides, when mixtures of different epoxides are employed to obtain the polyol of the formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as : 1,2-propylene oxide ; 1,2-butylene oxide ; 1,2-epoxydecane ; 1,2-epoxydodecane ; 1,2-epoxyoctane ; 2,3-epoxynorbornane ; 1,2-epoxy-3-ethoxypropane ; 1,2-epoxy-3-phenoxypropane ; 2,3-epoxypropyl 4-methoxyphenyl ether ; tetrahydrofuran ; 1,2-epoxy-3-cyclohexyloxypropane ; oxetane ; 1,2-epoxy-5-hexene ; 1,2-epoxyethylbenzene ; 1,2-epoxy-1-methoxy-2-methylpropane ; perfluorohexylethoxypropylene oxide ; benzyloxypropylene oxide, and the like. Also, the aforementioned epoxides may be employed as mixtures thereof. Further, certain cyclicethers of formula IX or X where b or f, respectively is 3 and the carbocyclic portion of the ring is substituted are resistant to polymerization alone, but copolymerize quite readily with more reactive cyclicethers. Suitable co-monomers include, for example, 2-methyl-tetrahydrofuran and 3-methyl-tetrahydrofuran. Also, while ethylene oxide may be employed as a co-monomer, ethylene oxide polymers, in the absence of more hydrophobic units, is characteristically too hydrophilic and absorbs too much aqueous fluid to be of use in accordance with the instant invention. However, ethylene oxide/propylene oxide copolymeric diols wherein there is 30-80%, preferably greater than 50%, more preferably greater than 66% propylene oxide, on a mole basis, is sufficiently hydrophobic so as to be substantially non-swellable in aqueous media, and yet sufficiently hydrophilic so as to exhibit a contact angle with water of less than 60° ; preferably less than 40°, more preferably less than 25°, more preferably less than 15°, most preferably less than 10°.

Many polymer diols of the formula HO-A-H are commercially available. Thus, suitable diol products include poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b' has a value between about 16 and 100 and the sum of a' and c' is between about 4 and about 100. Examples of such poloxamers, and their average values of a', b' and c', include poloxamer 101 (a' is 2, b' is 16, c' is 2) ; poloxamer 122 (a' is 5, b' is 21, c' is 5) ; poloxamer 181 (a' is 3, b' is 30, c' is 3) ; poloxamer 212 (a' is 8, b' is 35, c' is 8) ; poloxamer 231 (a' is 6, b' is 39, c' is 6) ; poloxamer 282 (a' is 10, b' is 47, c' is 10) ; poloxamer 333 (a' is 7, b' is 54, c' is 7) ; and poloxamer 401 (a' is 6, b' is 67, c' is 6).

Such poloxamers are available, e.g. from BASF Wyandotte under their Pluronic® brand name. Also suitable are the "reverse poloxamers", having polyethylene glycol bounded on each side by polypropylene glycol.

Polypropylene ether glycols include commercially available products having a molecular weight range between about 400 and about 4,000.

As stated above, the polymers for use in the instant invention are those which exhibit a receding contact angle at 20°C of less than 60°, preferably less than 40°, more preferably less than 25°, more preferably less than 15° and most preferably less than 10°. The measurement of such contact angle is conveniently performed using a modified "Wilhelmy Plate" technique, as described, for example, for J.D. Androde, et al. Surface and Interfacial Aspects of Biomedical Polymers, Vol. 1, Surface Chemistry and Physics, Plenum Press 1985, wherein a specimen sample in the form of a plate of known dimensions is immersed into the wetting solution, pure water, at a slow controlled rate, e.g. at 2-20 mm per minute.

As mentioned above, the instant polymers for use in the present invention possess a high degree of oxygen permeability. The oxygen permeability, Dk(× $10^{-10}$), is measured using a modification of ASTM standard D3985-81 in that (a) there is used 21% oxygen, i.e. air, instead of 99-100% oxygen, (b) the surface area of sample employed is 0.50 square meters versus 100 square meters and the humidity is controlled to be at 95-100% relative humidity instead of 0% relative humidity. The unit of Dk is (mm · ml $O_2$/cm$^2$ · sec · mmHg).

Typically, conventional fully swollen polyhydroxyethyl methacrylate lenses which are sparingly crosslinked possess a Dk(× $10^{-10}$), (mm · ml $O_2$/cm$^2$ · sec · mmHg) value of about 5-7.

The instant polymers for use as an ophthalmic device, such as a contact lens, possess a Dk(× $10^{-10}$) value generally greater than 7, preferably greater than about 15, more preferably greater than about 20 and most preferably greater than about 40.

The following examples are for illustrative purposes and are not to be construed as limiting the invention. All parts are by weight unless otherwise specified.

## Example 1 :

1.0 mole of propylene glycol (previously dried using 4A molecular sieves) and 3% by weight KOH are added to a stainless steel reactor, purged with nitrogen 5-7 times and then evacuated to 0 psig (1 psig = 0.0689476 bar) for at least 20-30 minutes. During this time period, the reaction mixture is gradually heated to 100°C. The reaction mixture vacuum is broken with a nitrogen sparge to approximately 1-2 psig. Then 4 mole of ethylene oxide is added in a manner so as not to exceed a temperature of 180°C and a pressure of 80 psig. The ethylene oxide is reacted down to 3-4 psig. 11.5 mole of propylene oxide is then added to the reaction mixture in such a manner as not to exceed a temperature of 180°C and a pressure of 80 psig, which is then reacted down to 3-4 psig. The additions of ethylene oxide and propylene oxide, in the same molar ratios, are repeated until the desired molecular weight is achieved. The mixture is then stripped at 100°C to 0 psig to remove any residual oxides, after which the mixture is neutralized and dried. Diol 1 has a molecular weight of 1480 and Diol 2 has a molecular weight of 4740. In each of Diol 1 and Diol 2, the blocks of polyethylene glycol are no longer than 3 ethylene oxide units, while the blocks of polypropylene glycol are no longer than 7 propylene oxide units.

## Example 2 :

To a dry, 0.25-liter, three-neck flask equipped with a thermometer, constant pressure dropping funnel, nitrogen inlet and condenser under a dry, nitrogen atmosphere is added 1.74 g (0.010 moles) toluene diisocyanate (TDI), 10 ml dry methylene chloride and 0.05 g tin octoate. 0.005 moles of a diol in example 1 in 40 ml of dry methylene chloride are added to the flask dropwise over a 40 minute period, maintaining a temperature less than 30°C. The reaction is continued for 2 hours. After 2 hours, 14.65 g (0.010 moles) hydroxybutyl terminated polydimethylsiloxane in 30 ml of dry methylene chloride are added rapidly to the system and the reaction allowed to continue 17 hours. Then 1.74 g (0.010 moles) toluene diisocyanate are added ; and after 3 hours, 1.30 g (0.010 moles) 2-hydroxyethylmethacrylate (HEMA) are added and the reaction stirred for 18 hours. After 18 hours, the isocyanate band is not apparent in the infrared spectrum. The volatiles are then removed from

the reaction system via vacuum rotary evaporation. The clear, viscous, reactive fluid is stored protected from light and thermal polymerization.

To the clear, viscous fluid is added one percent Darocur 1173 (UV initiator) and the mixture degassed and mixed via vacuum rotary evaporation. The material is then UV cured in the appropriate molds under UV light with an intensity of two to three milliwatts.

Example 3 :

Similar reactions are conducted as described in example 2 but with reactive components of different molecular weights and other variations as outlined in Table 1. The solvents are adjusted proportionally based on the weight of the materials used.

Table 1*

| Ex. | Diol | Silicone | TDI | HEMA | Tin Octoate | Darocur |
|---|---|---|---|---|---|---|
| 3 | | 40.03 | 6.96 | 2.60 | 0.06 | 1 % |
| | (0.01) | (0.02) | (0.04) | (0.02) | | |

* Weight is in grams. Number in parentheses is molar quantity. Initiator expressed in terms of percent of prepolymer in grams.

Example 4 :

To a dry, 100-milliliter, three-neck flask equipped with a thermometer, constant pressure dropping funnel, nitrogen inlet and condenser under a dry, nitrogen atmosphere is added 3.48 g (0.020 moles) toluene diisocyanate, 150 ml dry methylene chloride and dibutyl tin dilaurate and the mixture is heated to reflux. 14.65 g 4-Hydroxybutyl polydimethylsiloxane (0.010 moles) in 30 ml of dry methylene chloride are added dropwise to the flask. After 3 hours 0.005 moles of a diol of example 1 are added to the flask dropwise. The reaction is stirred at reflux for four hours and 1.30 g (0.010 moles) of 2-hydroxyethylmethacrylate are charged to the flask. After 17 hours, the isocyanate band is no longer observed in the infrared spectrum. The volatiles are removed via vacuum rotary evaporation. The clear, viscous, reactive fluid is protected from light and thermal polymerization until it is ready for use.

One percent Darocur 1173 is added to the prepolymer and the mixture degassed and mixed via vacuum rotary evaporation. The prepolymer is transferred to the appropriate molds and cured under UV light of three to five milliwatt intensity.

Example 5 :

To a dry, 100-milliliter, three-neck flask equipped with a thermometer, constant pressure dropping funnel, nitrogen inlet and condenser under a dry, nitrogen atmosphere is added 3.48 g (0.020 moles) toluene diisocyanate, 150 ml dry methylene chloride and dibutyl tin dilaurate and the mixture is heated to reflux. 14.65 g 4-Hydroxybutyl polydimethylsiloxane (0.010 moles) in 30 ml of dry methylene chloride are added dropwise to the flask. After 3 hours 0.005 moles of a diol of example 1 are added to the flask dropwise. The reaction is stirred at reflux for four hours and 1.30 g (0.010 moles) of 2-hydroxyethylmethacrylate are charged to the flask. After 17 hours, the isocyanate band is no longer observed in the infrared spectrum. The volatiles are removed via vacuum rotary evaporation. The clear, viscous, reactive fluid is protected from light and thermal polymerization until it is ready for use.

20 Percent by weight of PPGMM (Alcolac) and one percent Darocur 1173 is added to the prepolymer and the mixture degassed and mixed via vacuum rotary evaporation. The prepolymer is transferred to the appropriate molds and cured under UV light of three to five milliwatts per square centimeter intensity.

## Claims

### Claims for all designated Contracting States : AT, BE, CH, DE, FR, GB, GR, IT, LI, LU, NL, SE

1. An optically clear wettable, flexible, oxygen permeable ophthalmic device fabricated from a polymer of a crosslinkable monomer having a segment S″ of the formula

$$-(W-S'-L-D-A-L)_{a}- \qquad (Ia)$$

wherein a is 1 to 10 ;
each D is independently oxygen or $-N(R^9)-$ ;
each W is a single bond, oxygen or $-N(R^9)-$ ;
each S′ is independently a segment of formula II,

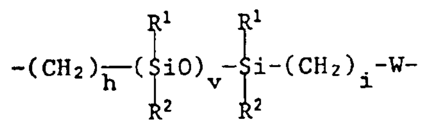

(II)

each h and i is an integer from 1 to 6, v is an integer from 2-300,
$R^1$ and $R^2$ are independently alkyl of up to 18 carbon atoms, or aryl of up to 12 carbon atoms,
each L is independently –BRB′–, –BR–, –RB′– or –R– ;
each of B and B′ is selected from

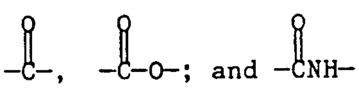

with the carbonyl group being bound to A, S′ or D ;
each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino ;
b) a divalent 5-7 membered cycloaliphatic group having 5 to 25 carbon atoms and a divalent 5-7 membered cycloaliphatic $C_1$-$C_{20}$ aliphatic group ;
c) a divalent arylene group having 6-25 carbon atoms ; and
d) a divalent aralkyl or alkaryl group having 7 to 25 carbon atoms ;
e) a divalent alkylene-aryl-alkylene having 8 to 30 carbon atoms,
wherein groups b), d) and e) can be optionally interrupted in the non-cyclic portions thereof by the same groups as in group a) and wherein the aryl rings in groups c), d) and e) may be further substituted with one or more substituents selected from halogen, $C_1$-$C_4$ alkyl, and $C_1$-$C_{12}$ perhalo alkyl ;
and each A is independently a polymeric block of poly-$C_2$-$C_6$-oxyalkylene of the formula III,

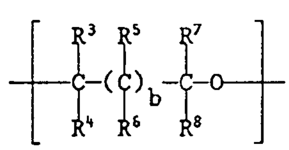

(III)

of which at least 30% of the A blocks within any one polymer are

a) homopolymers of oxyalkylene having no more than 15 oxyalkylene units, or
b) block copolymers of oxyalkylenes having homopolymeric subblocks of no more than 15 oxyalkylene units,

each A group having a total of from 1-1000 oxyalkylene units, in which formula b is independently zero to 4, the terminal oxygen within each unit of formula III being replaceable by $-NR^9-$, each of $R^3$, $R^4$, $R^7$ and $R^8$ is independently selected from the group consisting of hydrogen, halogen, an aliphatic, aromatic or heterocyclic radical selected from : unsubstituted $C_1$-$C_{16}$ alkyl ; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atoms already singly bound to another oxygen atom ; $R^3$, $R^4$, $R^7$ and $R^8$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above ;
each $R^5$ and $R^6$ are selected from the same group set forth above for $R^3$ ; and $R^5$ and $R^6$ are further independently selected from $C_1$-$C_{16}$ alkoxycarbonyl, $C_2$-$C_{16}$ alkanoyloxy, $C_2$-$C_{16}$ alkenyloxycarbonyl, and $C_3$-$C_{16}$ alkenoyloxy, each of which is unsubstituted or substituted by fluoro, aryl of up to 10 carbon atoms, or $C_1$-$C_{16}$ alkoxy, and $R^5$ and $R^6$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having an oxygen atom as its link to the rest of the molecule may not be a substituent on the same carbon atom which is singly bonded to another oxygen atom ; in addition, 2 adjacent groups, selected from $R^3$ to $R^8$, together with the atoms to which they are attached may form a 5-8 membered cycloalkyl, 5-8 membered oxacycloalkyl or bicycloalkyl ring ; and each $R^9$ is independently selected from hydrogen, $C_1$-$C_4$ alkyl and phenyl, said device having a receding contact angle of less than 60° and having a Dk ($\times 10^{-10}$ mm · ml $O_2$/cm$^2$ · sec · mmHg) of at least about 7, and a water content of at least 10% in the swollen state in its aqueous environment of use.

2. The device of claim 1 wherein said polymer is a copolymer of said monomer having a segment of formula Ia and a hydrophilic modifying monomer in a amount sufficient to maintain the water content of said polymer in its swollen state in its aqueous environment of use at at least 10%, said hydrophilic modifying monomer being selected from

aa) polyethylene glycols of the formula

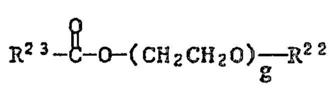 (A)

or ab) pyrrolidones of the formula

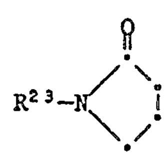 (B)

wherein $R^{22}$ is hydrogen or $C_1$-$C_7$ alkyl, g is an integer of from 1-25,
or ac) a compound of the formula

$$(R^{24}\text{-div})_{nz}Hy \quad (C)$$

wherein $R^{23}$ is a polymerizable or reactive moiety selected from i) ethylenically unsaturated radicals, ii) anhydrides, iii) amines, iv) acids, v) esters, vi) amides, vii) ethers, viii) acid halides,
$R^{24}$ is selected from the meanings given for $R^{23}$ and ix) epoxy groups, x) isocyanates and isothiocyanates

and xi) hydroxy ;
div is selected from
ba) a divalent aliphatic group of up to 25 carbon atoms, which may also be interrupted, or terminated, or interrupted and terminated by oxy, carbonyloxy, amino, aminocarbonyl,oxycarbonyl, ureido, oxycarbonylamino, or carbonylamino ;
bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;
bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;
bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl ;
be)

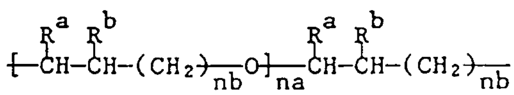

(D)

wherein na is an integer of 8-100 ; and
bea) $R^a$ is hydrogen, $R^b$ is methyl, and nb is zero ; or
beb) $R^a$ is methyl, $R^b$ is hydrogen, and nb is zero ; or
bec) $R^a$ and $R^b$ are hydrogen and nb is one ;
nz is an integer of 1 up to the valence of Hy and where nz is less than the valence of Hy, the remaining valences of Hy are taken up with hydrogens ;
and Hy is a hydrophilic group selected from
ca) morpholino ; cyclic amide radicals of 5-7 ring members ; saturated and unsaturated cyclic N,N-diamide radicals of 5-6 ring members ; groups of the formula

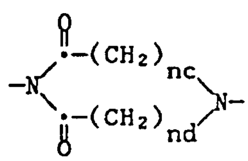

(E) or

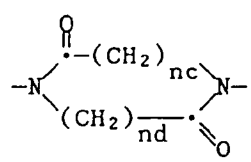

(E')

having 6-7 ring members wherein nc and nd are selected from 0-2 ; and cyclic amines of 5-6 ring members; each unsubstituted or substituted by hydroxy-$C_1$-$C_5$ alkyl, carboxy, or lower alkyl ;
cb) tetrahydrofurfuryl ;
cc) mono-, di-, and polysaccharide radicals, whether straight chain or cyclic, their corresponding sugar alcohol radicals, pentaerythritol radicals, and polyvinyl alcohol radicals ;
cd) polyhydroxy $C_2$-$C_7$ alkyl radicals.

3. The device of claim 1 wherein a is one.

4. The device of claim 1 wherein each D and W is oxygen.

5. The device of claim 1 wherein each L is –BRB′–, each B is –C(O)NH– wherein the nitrogen atom is bound to R, and R is

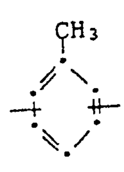

6. The device of claim 5 wherein R is

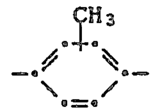

7. The device of claim 1 wherein each $R^1$ and $R^2$ is methyl.

8. The device of claim 1 wherein h and i are each 4.

9. The device of claim 1 wherein v is from about 15 to about 50.

10. The device of claim 7 wherein h is 4 ; i is 4 ; and v is from about 15 to about 50.

11. The device of claim 1 wherein

a) each b is 1 and $R^3$-$R^8$ are all hydrogen or b) each b is zero, each $R^3$, $R^4$ and $R^8$ is hydrogen, and each $R^7$ is methyl.

12. The wettable, flexible, oxygen permeable, ophthalmic device of claim 1, the crosslinkable monomer having

a) a partial formula

$$-(D\text{-}A\text{-}L\text{-}S'')_c- \qquad (Ib)$$

wherein each S″ is independently a segment of formula Ia of claim 1 ; each D, A and L is independently as defined in claim 1 ; c is 1-10 ; and a times c is 1-10 ; or

b) a partial formula

$$-(S'')_c\text{-}D\text{-}S'\text{-}La- \qquad (IC)$$

wherein each S″ is independently a segment of formula Ia of claim 1 ; D and S′ are as defined in claim 1; c is 1-10, and La is selected from –BRB′– and –BR–.

13. The device of claim 12 wherein a is one.

14. The device of claim 12 wherein each D and W is oxygen.

15. The device of claim 12 wherein each L is –BRB′–, each B is –C(O)NH– wherein the nitrogen atom is bound to R, and R is

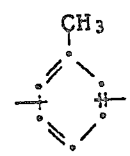

16. The device of claim 12 wherein R is

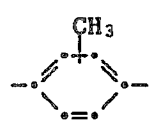

17. The device of claim 12 wherein each $R^1$ and $R^2$ is methyl.

18. The device of claim 12 wherein h and i are each 4.

19. The device of claim 12 wherein v is from about 15 to about 50.

20. The device of claim 17 wherein h is 4 ; i is 4 ; and v is from about 15 to about 50.

21. The device of claim 12 wherein

a) each b is 1 and $R^3$-$R^8$ are all hydrogen or b) each b is zero, each $R^3$, $R^4$ and $R^8$ is hydrogen, and each $R^7$ is methyl.

22. The device of claim 14 wherein c is 1.

23. The device of claim 12 wherein La is –BRB′–.

24. The wettable, flexible, oxygen permeable ophthalmic device of claim 13, the monomer having the formula

$$L'\text{-}[(D\text{-}A\text{-}L)_e\text{-}S''\text{-}]_c L'' \qquad (I)$$

wherein e is zero or one ;
each D, A, L, S" and c is independently as defined in claim 1 ;
L' is hydrogen, P'-BRB'–, P'-RB'–, P'-BR–, or P'-R– ;
L" is hydrogen, P', or, in case that e is zero also –D-S'-La-P' ;
La being as defined in claim 12 ;
and P' is hydrogen, amino, hydroxy, NCO, NCS, vinyl or a moiety containing a crosslinkable group which may be crosslinked when coreacted with a suitable crosslinking agent or when irradiated by actinic radiation.

25. The device of claim 24 wherein a is one.

26. The device of claim 24 wherein each D and W is oxygen.

27. The device of claim 24 wherein each L is –BRB'–, each B is –C(O)NH– wherein the nitrogen atom is bound to R, and R is

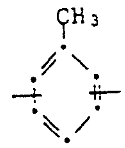

28. The device of claim 24 wherein R is

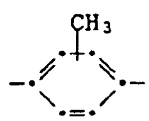

29. The device of claim 24 wherein each $R^1$ and $R^2$ is methyl.

30. The device of claim 24 wherein h and i are each 4.

31. The device of claim 24 wherein v is from about 15 to about 50.

32. The device of claim 29 wherein h is 4 ; i is 4 ; and v is from about 15 to about 50.

33. The device of claim 24 wherein
a) each b is 1 and $R^3$-$R^8$ are all hydrogen or b) each b is zero, each $R^3$, $R^4$ and $R^8$ is hydrogen, and each $R^7$ is methyl.

34. The device of claim 24 wherein c is 1.

35. The device of claim 24 wherein L' is P'-BRB'–.

36. The device of claim 24 wherein La is –BRB'–.

37. The device of claim 24 wherein each P' is

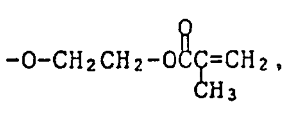 , 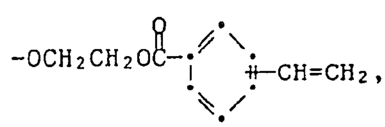 , or

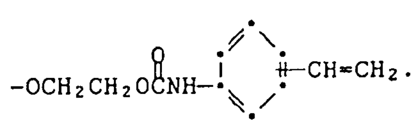 .

38. The device of claim 1 which is a contact lens.

39. An optically clear wettable, flexible, oxygen permeable polymer of a crosslinkable monomer having a segment S" of the formula

$$-(W-S'-L-D-A-L)_{a}- \qquad (Ia)$$

wherein all the variables have the meaning as specified in claim 1, said polymer having a receding contact angle of less than 60° and having a Dk (× $10^{-10}$ mm · ml $O_2$/cm² · sec · mmHg) of at least about 7, and a water content of at least 10% in the swollen state in its aqueous environment of use.

40. The polymer of claim 39 wherein said polymer is a copolymer of said monomer having a segment of formula Ia and a hydrophilic modifying monomer in an amount sufficient to maintain the water content of said polymer in its swollen state in its aqueous environment of use at at least 10%, said hydrophilic modifying monomer being selected from the monomers as specified in claim 2.

41. The device of claim 2 wherein said hydrophilic modifying monomer is selected from the group of the formula

$$(R^{24}\text{-div})_{nz}Hy \qquad (C)$$

42. The polymer of claim 40 wherein said hydrophilic modifying monomer is selected from the group of the formula

$$(R^{24}\text{-div})_{nz}Hy \qquad (C)$$

43. The device of claim 1 wherein at least 50% of said polymeric A blocks have no more than 15 oxyalkylene units per homopolymeric sub block.

44. The device of claim 43 wherein at least 75% of said polymeric A blocks have no more than 15 oxyalkylene units per homopolymeric sub block.

45. The device of claim 44 wherein 100% of the polymeric A blocks have no more than 15 oxyalkylene units per homopolymeric sub block.

46. The device of claim 1 wherein within said A blocks having no more than 15 oxyalkylene units per homopolymeric sub block, said homopolymeric sub block has no more than 10 oxyalkylene units per homopolymeric sub block.

47. The device of claim 1 wherein within said A blocks having no more than 15 oxyalkylene units per homopolymeric sub block, said homopolymeric sub block has no more than 7 oxyalkylene units per homopolymeric sub block.

48. The device of claim 1 wherein within said A blocks having no more than 15 oxyalkylene units per homopolymeric sub block, said homopolymeric sub block has no more than 4 oxyalkylene units per homopolymeric sub block.

49. The device of claim 1 wherein said A groups which are limited to having no more than 15 oxyalkylene units per homopolymeric subblock are of the formula

$$[\text{-polyoxyalkylene}_1\text{-polyoxyalkylene}_2\text{-}]_{xx}$$

wherein each polyoxyalkylene$_1$ and polyoxyalkylene$_2$ is independently a homopolymer of $C_2$-$C_5$ oxyalkylene, each homopolymer having no more than 15 oxyalkylene units and no two adjacent polyoxyalkylene sub blocks are the same and xx is an integer of one to 500.

50. Use of a polymer of claim 39 or 40 for the manufacture of an ophthalmic device.

51. The device of claim 24 wherein the monomer of formula I is of the formula VII,

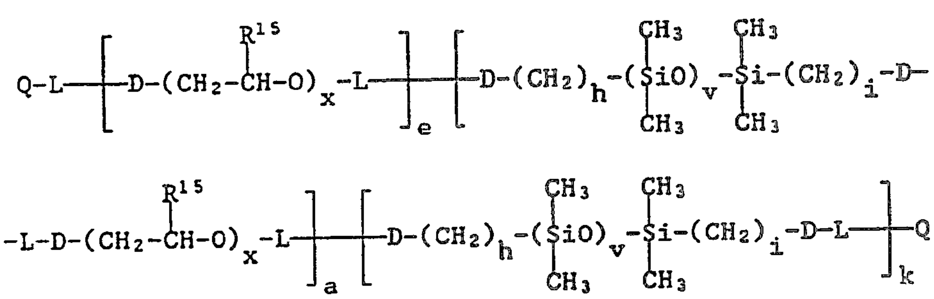

(VII)

where Q is

$$-\overset{R^a}{\overset{|}{C}}=CH_2$$

and L is B-R-B' or B-R, one of e and k is one and the other zero ; $R^a$ is hydrogen or methyl ; each R is a divalent arylene group of 6 to 15 carbon atoms, a divalent $C_6$-$C_{10}$-arylene-amino carbonyloxy-$C_2$-$C_6$ alkylene ; or divalent $C_3$-$C_{15}$ cycloaliphatic ; B and B' are each

$$-\overset{O}{\overset{\|}{C}}-O-$$

or

$$-\overset{O}{\overset{\|}{C}}-\underset{H}{\underset{|}{N}}-;$$

each $R^{15}$ is alkyl of 1 to 6 carbon atoms, or mixtures thereof with units wherein $R^{15}$ is hydrogen, preferably with the proviso that $R^{15}$ can be hydrogen in no more than about 75%, of any one unit ; each x is 4-200, v is 2-66, i and h are independently 2, 3 or 4 ; and a is an integer of 1-10.

**Claims for the Contracting State : ES**

1. An optically clear wettable, flexible, oxygen permeable ophthalmic device fabricated from a polymer of a crosslinkable monomer having a segment S" of the formula

$$-(W-S'-L-D-A-L)_{a}- \qquad (Ia)$$

wherein a is 1 to 10 ; each D is independently oxygen or $-N(R^9)-$ ; each W is a single bond, oxygen or $-N(R^9)-$ ; each S' is independently a segment of formula II,

$$-(CH_2)_h-(\underset{R^2}{\underset{|}{\overset{R^1}{\overset{|}{Si}}}}O)_v-\underset{R^2}{\underset{|}{\overset{R^1}{\overset{|}{Si}}}}-(CH_2)_i-W- \qquad (II)$$

each h and i is an integer from 1 to 6, v is an integer from 2-300, $R^1$ and $R^2$ are independently alkyl of up to 18 carbon atoms, or aryl of up to 12 carbon atoms, each L is independently –BRB'–, –BR–, –RB'– or –R– ; each of B and B' is selected from

$$-\overset{O}{\overset{\|}{C}}-, \quad -\overset{O}{\overset{\|}{C}}-O-; \text{ and } -\overset{O}{\overset{\|}{C}}NH-$$

with the carbonyl group being bound to A, S′ or D ;
each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino ;
b) a divalent 5-7 membered cycloaliphatic group having 5 to 25 carbon atoms and a divalent 5-7 membered cycloaliphatic $C_1$-$C_{20}$ aliphatic group ;
c) a divalent arylene group having 6-25 carbon atoms ; and
d) a divalent aralkyl or alkaryl group having 7 to 25 carbon atoms ;
e) a divalent alkylene-aryl-alkylene having 8 to 30 carbon atoms,
wherein groups b), d) and e) can be optionally interrupted in the non-cyclic portions thereof by the same groups as in group a) and wherein the aryl rings in groups c), d) and e) may be further substituted with one or more substituents selected from halogen, $C_1$-$C_4$ alkyl, and $C_1$-$C_{12}$ perhalo alkyl ;
and each A is independently a polymeric block of poly-$C_2$-$C_6$-oxyalkylene of the formula III,

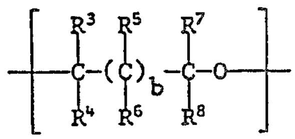

(III)

of which at least 30% of the A blocks within any one polymer are

a) homopolymers of oxyalkylene having no more than 15 oxyalkylene units, or
b) block copolymers of oxyalkylenes having homopolymeric subblocks of no more than 15 oxyalkylene units, each A group having a total of from 1-1000 oxyalkylene units, in which formula b is independently zero to 4, the terminal oxygen within each unit of formula III being replaceable by $-NR^9-$, each of $R^3$, $R^4$, $R^7$ and $R^8$ is independently selected from the group consisting of hydrogen, halogen, an aliphatic, aromatic or heterocyclic radical selected from : unsubstituted $C_1$-$C_{16}$ alkyl ; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atoms already singly bound to another oxygen atom ; $R^3$, $R^4$, $R^7$ and $R^8$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above ;
each $R^5$ and $R^6$ are selected from the same group set forth above for $R^3$ ; and $R^5$ and $R^6$ are further independently selected from $C_1$-$C_{16}$ alkoxycarbonyl, $C_2$-$C_{16}$ alkanoyloxy, $C_2$-$C_{16}$ alkenyloxycarbonyl, and $C_3$-$C_{16}$ alkenoyloxy, each of which is unsubstituted or substituted by fluoro, aryl of up to 10 carbon atoms, or $C_1$-$C_{16}$ alkoxy, and $R^5$ and $R^6$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having an oxygen atom as its link to the rest of the molecule may not be a substituent on the same carbon atom which is singly bonded to another oxygen atom ; in addition, 2 adjacent groups, selected from $R^3$ to $R^8$, together with the atoms to which they are attached may form a 5-8 membered cycloalkyl, 5-8 membered oxacycloalkyl or bicycloalkyl ring ; and each $R^9$ is independently selected from hydrogen, $C_1$-$C_4$ alkyl and phenyl, said device having a receding contact angle of less than 60° and having a Dk ($\times 10^{-10}$ mm · ml $O_2$/cm$^2$ · sec · mmHg) of at least about 7, and a water content of at least 10% in the swollen state in its aqueous environment of use.

2. The device of claim 1 wherein said polymer is a copolymer of said monomer having a segment of formula Ia and a hydrophilic modifying monomer in a amount sufficient to maintain the water content of said polymer

in its swollen state in its aqueous environment of use at at least 10%, said hydrophilic modifying monomer being selected from

aa) polyethylene glycols of the formula

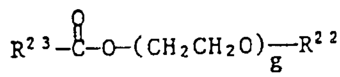

(A)

or ab) pyrrolidones of the formula

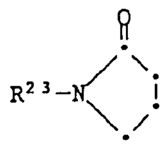

(B)

wherein $R^{22}$ is hydrogen or $C_1$-$C_7$ alkyl, g is an integer of from 1-25,

or ac) a compound of the formula

$$(R^{24}\text{-div})_{nz}Hy \quad (C)$$

wherein $R^{23}$ is a polymerizable or reactive moiety selected from i) ethylenically unsaturated radicals, ii) anhydrides, iii) amines, iv) acids, v) esters, vi) amides, vii) ethers, viii) acid halides,

$R^{24}$ is selected from the meanings given for $R^{23}$ and ix) epoxy groups, x) isocyanates and isothiocyanates and xi) hydroxy ;

div is selected from

ba) a divalent aliphatic group of up to 25 carbon atoms, which may also be interrupted, or terminated, or interrupted and terminated by oxy, carbonyloxy, amino, aminocarbonyl,oxycarbonyl, ureido, oxycarbonylamino, or carbonylamino ;

bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;

bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl ;

be)

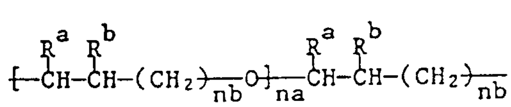

(D)

wherein na is an integer of 8-100 ; and

bea) $R^a$ is hydrogen, $R^b$ is methyl, and nb is zero ; or

beb) $R^a$ is methyl, $R^b$ is hydrogen, and nb is zero ; or

bec) $R^a$ and $R^b$ are hydrogen and nb is one ;

nz is an integer of 1 up to the valence of Hy and where nz is less than the valence of Hy, the remaining valences of Hy are taken up with hydrogens ;

and Hy is a hydrophilic group selected from

ca) morpholino ; cyclic amide radicals of 5-7 ring members ; saturated and unsaturated cyclic N,N-diamide radicals of 5-6 ring members ; groups of the formula

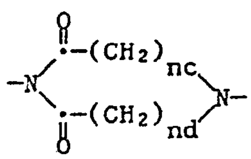 (E) or 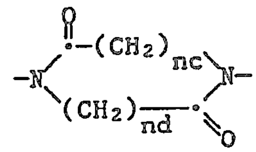 (E')

having 6-7 ring members wherein nc and nd are selected from 0-2 ; and cyclic amines of 5-6 ring members; each unsubstituted or substituted by hydroxy-$C_1$-$C_5$ alkyl, carboxy, or lower alkyl ;
cb) tetrahydrofurfuryl ;
cc) mono-, di-, and polysaccharide radicals, whether straight chain or cyclic, their corresponding sugar alcohol radicals, pentaerythritol radicals, and polyvinyl alcohol radicals ;
cd) polyhydroxy $C_2$-$C_7$ alkyl radicals.

3. The device of claim 1 wherein a is one.

4. The device of claim 1 wherein each D and W is oxygen.

5. The device of claim 1 wherein each L is –BRB'–, each B is –C(O)NH– wherein the nitrogen atom is bound to R, and R is

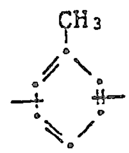

6. The device of claim 5 wherein R is

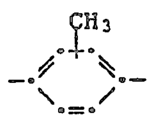

7. The device of claim 1 wherein each $R^1$ and $R^2$ is methyl.

8. The device of claim 1 wherein h and i are each 4.

9. The device of claim 1 wherein v is from about 15 to about 50.

10. The device of claim 7 wherein h is 4 ; i is 4 ; and v is from about 15 to about 50.

11. The device of claim 1 wherein
a) each b is 1 and $R^3$-$R^8$ are all hydrogen or b) each b is zero, each $R^3$, $R^4$ and $R^8$ is hydrogen, and each $R^7$ is methyl.

12. The wettable, flexible, oxygen permeable, ophthalmic device of claim 1 the crosslinkable monomer having
a) a partial formula

$$-(D-A-L-S'')_c- \qquad (Ib)$$

wherein each S″ is independently a segment of formula Ia of claim 1 ;
each D, A and L is independently as defined in claim 1 ; c is 1-10 ; and a times c is 1-10 ; or
b) a partial formula

$$-(S'')_c-D-S'-La- \qquad (IC)$$

wherein each S″ is independently a segment of formula Ia of claim 1 ; D and S' are as defined in claim 1; c is 1-10, and La is selected from –BRB'– and –BR–.

13. The device of claim 12 wherein a is one.

14. The device of claim 12 wherein each D and W is oxygen.

15. The device of claim 12 wherein each L is –BRB'–, each B is –C(O)NH– wherein the nitrogen atom is bound to R, and R is

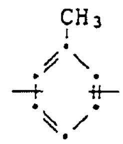

16. The device of claim 12 wherein R is

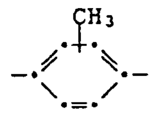

17. The device of claim 12 wherein each $R^1$ and $R^2$ is methyl.

18. The device of claim 12 wherein h and i are each 4.

19. The device of claim 12 wherein v is from about 15 to about 50.

20. The device of claim 17 wherein h is 4 ; i is 4 ; and v is from about 15 to about 50.

21. The device of claim 12 wherein

a) each b is 1 and $R^3$-$R^8$ are all hydrogen or b) each b is zero, each $R^3$, $R^4$ and $R^8$ is hydrogen, and each $R^7$ is methyl.

22. The device of claim 14 wherein c is 1.

23. The device of claim 12 wherein La is –BRB′–.

24. The wettable, flexible, oxygen permeable ophthalmic device of claim 13 the monomer having the formula

$$L'\text{-}[(D\text{-}A\text{-}L)_e\text{-}S''\text{-}]_c\text{-}L'' \qquad (I)$$

wherein e is zero or one ;
each D, A, L, S″ and c is independently as defined in claim 1 ;
L′ is hydrogen, P′-BRB′–, P′-RB′–, P′-BR–, or P′-R– ;
L″ is hydrogen, P′, or, in case that e is zero also –D-S′-La-P′ ;
La being as defined in claim 12 ;
and P′ is hydrogen, amino, hydroxy, NCO, NCS, vinyl or a moiety containing a crosslinkable group which may be crosslinked when coreacted with a suitable crosslinking agent or when irradiated by actinic radiation.

25. The device of claim 24 wherein a is one.

26. The device of claim 24 wherein each D and W is oxygen.

27. The device of claim 24 wherein each L is –BRB′–, each B is –C(O)NH– wherein the nitrogen atom is bound to R, and R is

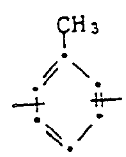

28. The device of claim 24 wherein R is

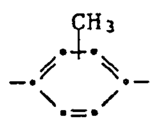

29. The device of claim 24 wherein each $R^1$ and $R^2$ is methyl.

30. The device of claim 24 wherein h and i are each 4.

31. The device of claim 24 wherein v is from about 15 to about 50.

32. The device of claim 29 wherein h is 4 ; i is 4 ; and v is from about 15 to about 50.

33. The device of claim 24 wherein

a) each b is 1 and $R^3$-$R^8$ are all hydrogen or b) each b is zero, each $R^3$, $R^4$ and $R^8$ is hydrogen, and each $R^7$ is methyl.

34. The device of claim 24 wherein c is 1.

35. The device of claim 24 wherein L′ is P′-BRB′–.

36. The device of claim 24 wherein La is –BRB′–.

37. The device of claim 24 wherein each P′ is

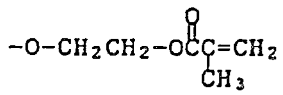,

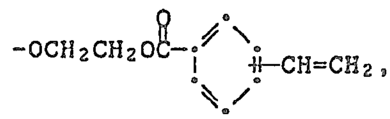, or

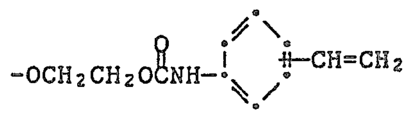.

38. The device of claim 1 which is a contact lens.

39. A process for manufacture of an optically clear wettable, flexible, oxygen permeable polymer of a crosslinkable monomer having a segment S″ of the formula

$$-(W-S'-L-D-A-L)_{a}- \qquad (Ia)$$

wherein all the variables have the meaning as specified in claim 1, said polymer having a receding contact angle of less than 60° and having a Dk ($\times 10^{-10}$ mm · ml $O_2$/cm$^2$ · sec · mmHg) of at least about 7, and a water content of at least 10% in the swollen state in its aqueous environment of use, by reacting the required intermediates in a manner known per se.

40. The process of claim 39 wherein said polymer is a copolymer of said monomer having a segment of formula Ia and a hydrophilic modifying monomer in an amount sufficient to maintain the water content of said polymer in its swollen state in its aqueous environment of use at at least 10%, said hydrophilic modifying monomer being selected from the monomers as specified in claim 2.

41. The device of claim 2 wherein said hydrophilic modifying monomer is selected from the group of the formula

$$(R^{24}\text{-div})_{nz}Hy \qquad (C)$$

42. The process of claim 40 wherein said hydrophilic modifying monomer is selected from the group of the formula

$$(R^{24}\text{-div})_{nz}Hy \qquad (C)$$

43. The device of claim 1 wherein at least 50% of said polymeric A blocks have no more than 15 oxyalkylene units per homopolymeric sub block.

44. The device of claim 43 wherein at least 75% of said polymeric A blocks have no more than 15 oxyalkylene units per homopolymeric sub block.

45. The device of claim 44 wherein 100% of the polymeric A blocks have no more than 15 oxyalkylene units per homopolymeric sub block.

46. The device of claim 1 wherein within said A blocks having no more than 15 oxyalkylene units per homopolymeric sub block, said homopolymeric sub block has no more than 10 oxyalkylene units per homopolymeric sub block.

47. The device of claim 1 wherein within said A blocks having no more than 15 oxyalkylene units per homopolymeric sub block, said homopolymeric sub block has no more than 7 oxyalkylene units per homopolymeric sub block.

48. The device of claim 1 wherein within said A blocks having no more than 15 oxyalkylene units per homopolymeric sub block, said homopolymeric sub block has no more than 4 oxyalkylene units per homopolymeric sub block.

49. The device of claim 1 wherein said A groups which are limited to having no more than 15 oxyalkylene units per homopolymeric subblock are of the formula

$$[\text{-polyoxyalkylene}_1\text{-polyoxyalkylene}_2\text{-}]_{xx}$$

wherein each polyoxyalkylene$_1$ and polyoxyalkylene$_2$ is independently a homopolymer of $C_2$-$C_5$ oxyalkylene, each homopolymer having no more than 15 oxyalkylene units and no two adjacent polyoxyalkylene sub blocks are the same and xx is an integer of one to 500.

50. Use of a polymer of claim 39 or 40 for the manufacture of an ophthalmic device.

51. The device of claim 24 wherein the monomer of formula I is of the formula VII,

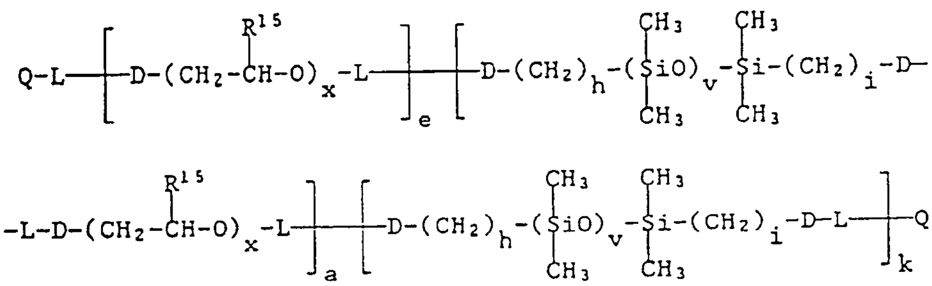

(VII)

where Q is

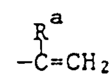

and L is B-R-B' or B-R,
one of e and k is one and the other zero ; $R^a$ is hydrogen or methyl ;
each R is a divalent arylene group of 6 to 15 carbon atoms, a divalent $C_6$-$C_{10}$-arylene-amino carbonyloxy-$C_2$-$C_6$ alkylene ;
or divalent $C_3$-$C_{15}$ cycloaliphatic ;
B and B' are each

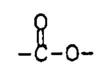

or

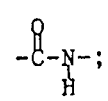

each $R^{15}$ is alkyl of 1 to 6 carbon atoms, or mixtures thereof with units wherein $R^{15}$ is hydrogen, preferably with the proviso that $R^{15}$ can be hydrogen in no more than about 75%, of any one unit ;
each x is 4-200, v is 2-66, i and h are independently 2, 3 or 4 ; and a is an integer of 1-10.

## Ansprüche

### Patentansprüche für die Vertragsstaaten : AT, BE, CH, DE, FR, GB, GR, IT, LI, LU, NL, SE

1. Optisch klares, benetzbares, flexibles, sauerstoffdurchlässiges ophthalmisches Mittel, hergestellt aus einem Polymer aus einem vernetzbaren Monomer mit einem Segment S" der Formel

$$-(W\text{-}S'\text{-}L\text{-}D\text{-}A\text{-}L)_a \quad (IA)$$

worin a 1 bis 10 ist ; jedes D unabhängig Sauerstoff oder $-N(R^9)-$ ist ; jedes W eine Einfachbindung, Sauerstoff oder $-N(R^9)-$ ist ; jedes S′ unabhängig ein Segment mit der Formel II ist,

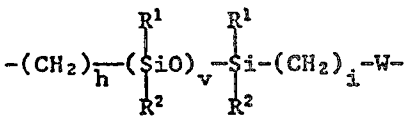 (II)

jedes h und i eine ganze Zahl von 1 bis 6 ist, v eine ganze Zahl von 2-300 ist ; $R^1$ und $R^2$ unabhängig Alkyl mit bis zu 18 Kohlenstoffatomen oder Aryl mit bis zu 12 Kohlenstoffatomen sind, jedes L unabhänig –BRB′–, –BR–, –RB′– oder –R– ist ; jedes von B und B′ ausgewählt wird aus

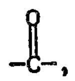 , 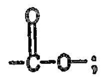 ; und 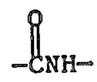

wobei die Carbonylgruppe an A, S′ oder D gebunden ist ; jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann ;
b) einer divalenten 5-7 gliedrigen cycloaliphatischen Gruppe mit 5 bis 25 Kohlenstoffatomen und einer divalenten 5-7 gliedrigen cycloaliphatischen-$C_1$-$C_{20}$-aliphatischen Gruppe ;
c) einer divalenten Arylengruppe mit 6-25 Kohlenstoffatomen ; und
d) einer divalenten Aralkyl- oder Alkarylgruppe mit 7 bis 25 Kohlenstoffatomen ;
e) einem divalenten Alkylen-Aryl-Alkylen mit 8 bis 30 Kohlenstoffatomen, worin die Gruppen b), d) und e) wahlweise im nicht-cyclischen Teil unterbrochen sein können durch die gleichen Gruppen wie in Gruppe a), und worin die Arylringe in den Gruppen c), d) und e) weiters substituiert sein können mit einem oder mehreren Substituenten, die ausgewählt werden aus Halogen, $C_1$-$C_4$-Alkyl und $C_1$-$C_{12}$-Perhaloalkyl ;
und jedes A unabhängig ein polymerer Block von Poly-$C_2$-$C_6$-oxyalkylen der Formel III ist,

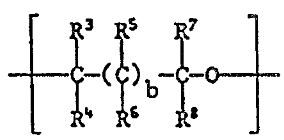 (III)

wovon zumindest 30% der A-Blöcke innerhalb irgendeines Polymers

a) Homopolymere von Oxyalkylen mit nicht mehr als 15 Oxyalkylen-Einheiten, oder
b) Blockcopolymere von Oxyalkylenen mit homopolymeren Subblöcken von nicht mehr als 15 Oxyalkylen-Einheiten sind ;

wobei jede Gruppe A insgesamt 1-1000 Oxyalkylen-Einheiten hat, in welcher Formel b unabhängig Null bis 4 ist, der endständige Sauerstoff in jeder Einheit der Formel III durch $-NR^9-$ ersetzbar ist, jedes von $R^3$, $R^4$, $R^7$ und $R^8$ unabhängig ausgewählt wird aus der Gruppe bestehend aus Wasserstoff, Halogen, einem aliphatischen, aromatischen oder heterocyclischen Rest, der ausgewählt wird aus : unsubstituiertem $C_1$-$C_{16}$-Alkyl ; substituiertem $C_1$-$C_{16}$-Alkyl ; unsubstituiertem $C_2$-$C_{16}$-Alkenyl ; und substituiertem $C_2$-$C_{16}$-Alkenyl ; wobei die Alkyl- und Alkenyl-Substituenten unabhängig ausgewählt werden aus $C_1$-$C_{16}$-Alkoxy-carbonyl, $C_2$-$C_{16}$-Alkenyloxycarbonyl, Fluor, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der benannten Alkyl- und Alkenyl-Substituenten seinerseits wahlweise substituiert ist durch $C_1$-$C_6$-Alkyl, Fluor oder ein $C_1$-$C_6$-Alkoxy, vorausgesetzt, daß das zuletzt angeführte Alkoxy nicht an ein Kohlenstoffatom gebunden ist, das schon einfach an ein anderes Sauerstoffatom gebunden ist ; $R^3$,

$R^4$, $R^7$ und $R^8$ weiters unabhängig ausgewählt werden aus Aryl mit bis zu 10 Kohlenstoffatomen, $C_3$-$C_8$-Cycloalkyl und Oxacycloalkyl mit bis zu 7 Kohlenstoffatomen, wovon jedes unsubstituiert oder weiter substituiert sein kann mit einem Substituenten, der ausgewählt wird aus der Gruppe von Substituenten für das genannte Alkyl, die oben dargelegt ist ;

jedes $R^5$ und $R^6$ ausgewählt wird aus der gleichen Gruppe, die oben für $R^3$ angeführt ist ; und $R^5$ und $R^6$ weiters unabhängig ausgewählt werden aus $C_1$-$C_{16}$-Alkoxycarbonyl, $C_2$-$C_{16}$-Alkanoyloxy, $C_2$-$C_{16}$-Alkenyloxycarbonyl und $C_3$-$C_{16}$-Alkenoyloxy, wovon jedes unsubstituiert ist oder substituiert durch Fluor, Aryl mit bis zu 10 Kohlenstoffatomen oder $C_1$-$C_{16}$-Alkoxy, und $R^5$ und $R^6$ weiters unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, wovon jedes weiter substituiert sein kann durch Fluor, $C_1$-$C_6$-Alkyl oder $C_1$-$C_6$-Alkoxy, vorausgesetzt, daß jeder Substituent, der ein Sauerstoffatom als Verbindung zum Rest des Moleküls hat, nicht ein Substituent an demselben Kohlenstoffatom sein darf, das einfach an ein anderes Sauerstoffatom gebunden ist ; weiters können zwei benachbarte Gruppen, ausgewählt unter $R^3$ bis $R^8$, zusammen mit den Atomen, an die sie gebunden sind, einen 5-8 gliedrigen Cycloalkyl-, 5-8 gliedrigen Oxacycloalkyl- oder Bicycloalkylring bilden; und jedes $R^9$ wird unabhängig ausgewählt aus Wasserstoff, $C_1$-$C_4$-Alkyl und Phenyl, wobei besagtes Mittel einen anwachsenden Kontaktwinkel von weniger als 60° hat und ein Dk ($\times 10^{-10}$ mm · ml $O_2$/cm$^2$ · s · mmHg) von wenigstens etwa 7 und einen Wassergehalt von wenigstens 10% im gequollenen Zustand in der wäßrigen Umgebung der Anwendung.

2. Mittel nach Anspruch 1, worin das Polymer ein Copolymer ist aus genanntem Monomer mit einem Segment der Formel Ia und einem hydrophilen Modifizierungsmonomer in einer Menge, die ausreichend ist, um den Wassergehalt des Polymers im gequollenen Zustand in wäßrigen Milieu der Anwendung auf wenigstens 10% zu halten, wobei besagtes hydrophiles modifizierendes Monomer ausgewählt wird aus

aa) Polyethylenglycolen der Formel

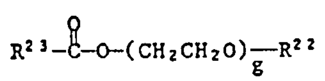 (A)

oder ab) Pyrrolidonen der Formel

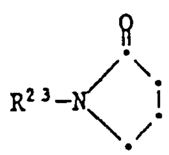 (B)

worin $R^{22}$ Wasserstoff oder $C_1$-$C_7$-Alkyl ist, g eine ganze Zahl von 1-25 ist,

oder ac) einer Verbindung der Formel

$$(R^{24}\text{-div})_{nz}Hy \quad (C)$$

worin $R^{23}$ eine polymerisierbare oder reaktive Einheit ist, die ausgewählt wird aus i) ethylenisch ungesättigten Resten, ii) Anhydriden, iii) Aminen, iv) Säuren, v) Estern, vi) Amiden, vii) Ethern, viii) Säurehalogeniden, $R^{24}$ ausgewählt wird aus den Bedeutungen für $R^{23}$ und ix) Epoxygruppen, x) Isocyanaten und Isothiocyanaten und xi) Hydroxy ;

div ausgewählt wird unter

ba) einer divalenten aliphatischen Gruppe mit bis zu 25 Kohlenstoffatomen, die auch durch Oxy, Carbonyloxy, Amino, Aminocarbonyl, Oxycarbonyl, Ureido, Oxycarbonylamino oder Carbonylamino unterbrochen oder abgeschlossen, oder unterbrochen und abgeschlossen sein kann ;

bb) einer divalenten 5-7 gliedrigen cycloaliphatischen und 5-7 gliedrigen cycloaliphatischen-$C_1$-$C_{20}$-aliphatischen Gruppe, die auch wie oben in der Gruppe ba) unterbrochen, abgeschlossen oder unterbrochen und abgeschlossen sein kann, außer daß diese Unterbrechungen nicht innerhalb der cycloaliphatischen Teile auftreten können ;

bc) einer divalenten Arylengruppe mit 6-25 Kohlenstoffatomen, die unsubstituiert ist oder substituiert durch

wenigstens einen Substituenten, der ausgewählt wird unter Halogen, $C_1$-$C_4$-Alkyl und $C_1$-$C_{12}$-Perhaloalkyl; bd) einem divalenten Aralkyl oder Alkaryl oder Alkylen-aryl-alkylen mit 7-25 Kohlenstoffatomen, das im Alkylteil unterbrochen oder nicht unterbrochen ist, oder abgeschlossen, oder unterbrochen im Alkylteil und abgeschlossen mit einer unterbrechenden oder abschließenden Gruppe wie unter ba) erwähnt, und jede dieser nicht unterbrochenen, unterbrochenen und abgeschlossenen Aralkyl- und Alkarylgruppen ist weiters unsubstituiert oder substituiert durch einen unter Halogen, $C_1$-$C_4$-Alkyl und $C_1$-$C_{12}$-Perhaloalkyl gewählten Substituenten :

be)

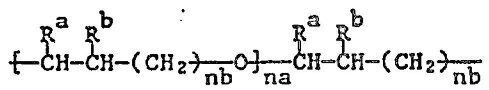

(D)

worin na eine ganze Zahl von 8-100 ist ; und

bea) $R^a$ Wasserstoff, $R^b$ Methyl und nb Null ist ; oder

beb) $R^a$ Methyl, $R^b$ Wasserstoff und nb Null ist ; oder

bec) $R^a$ und $R^b$ Wasserstoff sind und nb 1 ist ;

nz eine ganze Zahl von 1 bis zur Valenz von Hy ist, und wo nz weniger als die Valenz von Hy ist, die verbleibenden Valenzen von Hy von Wasserstoffatom besetzt werden ;

und Hy eine hydrophile Gruppe ist, die ausgewählt wird unter

ca) Morpholino ; cyclischen Amidresten mit 5-7 Ringgliedern ; gesättigten und ungesättigten cyclischen N,N-Diamidresten mit 5-6 Riggliedern ; Gruppen der Formeln

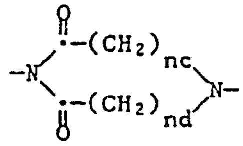

(E)

oder

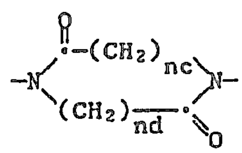

(E')

mit 6-7 Rieggliedern, worin nc und nd ausgewählt werden unter 0-2 ; und cyclischen Aminen mit 5-6 Ringgliedern ; jedes unsubstituiert oder substituiert durch Hydroxy-$C_1$-$C_5$-alkyl, Carboxy oder niederes Alkyl ;

cb) Tetrahydrofurfuryl ;

cc) Mono-, Di- oder Polysaccharidresten, geradkettig oder cyclisch, ihren entsprechenden Zuckeralkoholresten, Pentaerythritresten und Polyvinylalkoholresten ;

cd) Polyhydroxy-$C_2$-$C_7$-alkylresten.

3. Mittel nach Anspruch 1, worin a 1 ist.

4. Mittel nach Anspruch 1, worin jedes D und W Sauerstoff ist.

5. Mittel nach Anspruch 1, worin jedes L gleich –BRB'–, jedes B gleich –C(O)NH– ist, wobei das Stickstoffatom an R gebunden ist, und jedes R

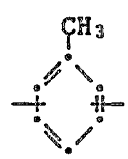

ist.

6. Mittel nach Anspruch 5, worin

R für

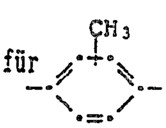

steht.

7. Mittel nach Anspruch 1, worin jedes $R^1$ und $R^2$ Methyl ist.

8. Mittel nach Anspruch 1, worin h und i jeweils 4 sind.

9. Mittel nach Anspruch 1, worin v etwa 15 bis etwa 50 beträgt.

10. Mittel nach Anspruch 7, worin h 4 ist ; i 4 ist ; und v etwa 15 bis etwa 50 beträgt.

11. Mittel nach Anspruch 1, worin a) jedes b 1 ist und $R^3$-$R^8$ alle Wasserstoff sind oder b) jedes b Null ist, jedes $R^3$, $R^4$ und $R^8$ Wasserstoff und jedes $R^7$ Methyl ist.

12. Benetzbares, flexibles sauerstoffdurchlässiges ophthalmisches Mittel nach Anspruch 1, wobei das vernetzbare Monomer

a) eine Teilformel

$$-(D\text{-}A\text{-}L\text{-}S'')_c- \quad (IB)$$

hat, worin jedes S″ unabhängig ein Segment der Formel Ia von Anspruch 1 ist ; jedes D, A und L unabhängig wie im Anspruch 1 definiert ist, c 1-10 beträgt ; und a mal c 1-10 ist ; oder

b) eine Teilformel

$$-(S'')_c\text{-}D\text{-}S'\text{-}La- \quad (IC)$$

hat, worin jedes S″ unabhängig ein Segment der Formel Ia von Anspruch 1 ist ; D und S′ wie im Anspruch 1 definiert sind ; C 1-10 ist und La ausgewählt wird aus –BRB′– und –BR–.

13. Mittel nach Anspruch 12, worin a 1 ist.

14. Mittel nach Anspruch 12, worin jedes D und W Sauerstoff ist.

15. Mittel nach Anspruch 12, worin jedes L für –BRB′– steht, jedes B für –C(O)NH–, wobei das Stickstoffatom an R gebunden ist, und R für

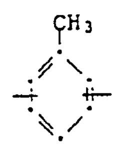

steht.

16. Mittel nach Anspruch 12, worin R für

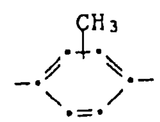

steht.

17. Mittel nach Anspruch 12, worin jedes $R^1$ und $R^2$ Methyl ist.

18. Mittel nach Anspruch 12, worin h und i jeweils 4 sind.

19. Mittel nach Anspruch 12, worin v etwa 15 bis etwa 50 beträgt.

20. Mittel nach Anspruch 17, worin h 4 ist ; i 4 ist ; und v etwa 15 bis etwa 50 beträgt.

21. Mittel nach Anspruch 12, worin a) jedes b 1 ist und $R^3$-$R^8$ alle Wasserstoff sind, oder b) jedes b Null ist, jedes $R^3$, $R^4$ und $R^8$ Wasserstoff und jedes $R^7$ Methyl ist.

22. Mittel nach Anspruch 14, worin c gleich 1 ist.

23. Mittel nach Anspruch 12, worin La für –BRB′– steht.

24. Benetzbares flexibles sauerstoffdurchlässiges ophthalmisches Mittel nach Anspruch 13, wobei das Monomer die Formel

$$L'-\left[(D\text{-}A\text{-}L)_e\text{-}S''\right]_c L'' \qquad (I)$$

hat, worin e gleich Null oder 1 ist ; jedes D, A, L, S″ und c unabhängig wie im Anspruch 1 definiert ist ; L′ für Wasserstoff, P′-BRB′–, P′-RB′–, P′-BR– oder P′-R– steht ;
L″ für Wasserstoff, P′ oder, im Falle daß e Null ist, für –D-S′-La-P′– steht ;
wobei La wie im Anspruch 12 definiert ist ;
und P′ für Wasserstoff, Amino, Hydroxy, NCO, NCS, Vinyl oder eine Einheit steht, welche eine vernetzbare Gruppe enthält, die vernetzt werden kann, wenn mit einem geeigneten Vernetzungsmittel coreagiert oder wenn mit wirksamer Strahlung bestrahlt wird.

25. Mittel nach Anspruch 24, worin a 1 ist.

26. Mittel nach Anspruch 24, worin jedes D und W Sauerstoff ist.

27. Mittel nach Anspruch 24, worin jedes L für –BRB′–, jedes B für –C(O)NH–, worin das Stickstofiatom

an R gebunden ist, und R für

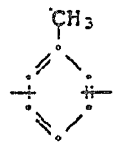 steht.

28. Mittel nach Anspruch 24, worin R für

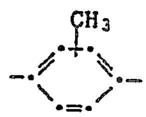 steht.

29. Mittel nach Anspruch 24, worin jedes $R^1$ und $R^2$ Methyl ist.

30. Mittel nach Anspruch 24, worin h und i jeweils 4 sind.

31. Mittel nach Anspruch 24, worin v etwa 15 bis etwa 50 beträgt.

32. Mittel nach Anspruch 29, worin h 4 ist; i 4 ist; und v etwa 15 bis etwa 50 beträgt.

33. Mittel nach Anspruch 24, worin a) jedes b 1 und $R^3$-$R^8$ alle Wasserstoff sind, oder b) jedes b Null ist, jedes $R^3$, $R^4$ und $R^8$ Wasserstoff und jedes $R^7$ Methyl ist.

34. Mittel nach Anspruch 24, worin c gleich 1 ist.

35. Mittel nach Anspruch 24, worin L′ für P′-BRB′– steht.

36. Mittel nach Anspruch 24, worin La für –BRB′– steht.

37. Mittel nach Anspruch 24, worin jedes P′

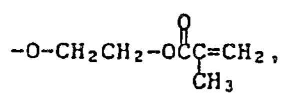 oder 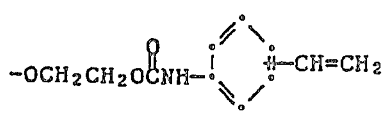

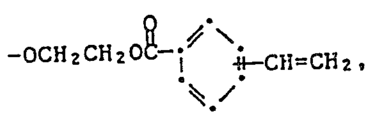

ist.

38. Mittel nach Anspruch 1, die eine Kontaktlinse ist.

39. Optisch, klares, benetzbares, flexibles, sauerstoffdurchlässiges Polymer aus einem vernetzbaren Monomer mit einem Segment S″ der Formel

$$-(W\text{-}S'L\text{-}D\text{-}A\text{-}L)_a \quad (IA)$$

worin alle Variablen die im Anspruch 1 angegebene Bedeutung haben, das Polymer einen anwachsenden Kontaktwinkel von weniger als 60° und ein Dk (× $10^{-10}$ mm · ml $O_2$/$cm^2$ · s · mmHg) von wenigstens etwa 7 und einen Wassergehalt von wenigstens 10% im geguollenen Zustand im wäßrigen Milieu der Anwendung hat.

40. Polymer nach Anspruch 39, worin das genannte Polymer ein Copolymer ist aus dem Monomer mit einem Segment der Formel Ia und einem hydrophilen modifizierenden Monomer in einer Menge, die ausreichend ist, um den Wassergehalt des genannten Polymers in seinem gequollenen Zustand im wäßrigen Milieu der Anwendung auf wenigstens 10% zu halten, wobei besagtes hydrophiles modifizierendes Monomer aus den Monomeren gewählt wird, wie sie im Anspruch 2 spezifiziert sind.

41. Mittel nach Anspruch 2, worin das hydrophile modifizierende Monomer aus der Gruppe der Formel

$$(R^{24}\text{-div})_{nz}Hy \quad (C)$$

ausgewählt wird.

42. Polymer nach Anspruch 40, worin das hydrophile modifizierende Monomer aus der Gruppe der Formel

$$(R^{24}\text{-div})_{nz}Hy \quad (C)$$

ausgewählt wird.

43. Mittel nach Anspruch 1, worin wenigstens 50% der polymeren A-Blöcke nicht mehr als 15 Oxyalkylen-Einheiten pro homopolymerem Subblock haben.

44. Mittel nach Anspruch 43, worin wenigstens 70% der polymeren A-Blöcke nicht mehr als 15 Oxyalkylen-Einheiten pro homopolymerem Subblock haben.

45. Mittel nach Anspruch 44, worin 100% der polymeren A-Blöcke nicht mehr als 15 Oxyalkylen-Einheiten pro homopolymerem Subblock haben.

46. Mittel nach Anspruch 1, worin in den genannten A-Blöcken mit nicht mehr als 15 Oxyalkylen-Einheiten pro homopolymerem Subblock dieser homopolymere Subblock nicht mehr als 10 Oxyalkylen-Einheiten pro homopolymerem Subblock hat.

47. Mittel nach Anspruch 1, worin in den genannten A-Blöcken mit nicht mehr als 15 Oxyalkylen-Einheiten pro homopolymerem Subblock dieser homopolymere Subblock nicht mehr als 7 Oxyalkylen-Einheiten pro homopolymerem Subblock hat.

48. Mittel nach Anspruch 1, worin innerhalb der A-Blöcke mit nicht mehr als 15 Oxyalkylen-Einheiten pro homopolymerem Subblock dieser homopolymere Subblock nicht mehr als 4 Oxyalkylen-Einheiten pro homopolymerem Subblock hat.

49. Mittel nach Anspruch 1, worin diese A-Gruppen, die auf nicht mehr als 15 Oxyalkylen-Einheiten pro homopolymerem Subblock limitiert sind, die Formel

$$[\text{–Polyoxyalkylen}_1\text{-Polyoxyalkylen}_2\text{–})_{xx}$$

haben, in der jedes $\text{Polyoxyalkylen}_1$ und $\text{Polyoxyalkylen}_2$ unabhängig ein Homopolymer ist aus $C_2$-$C_5$-Oxyalkylen, jedes Homopolymer nicht mehr als 15 Oxyalkylen-Einheiten hat und keine zwei benachbarten Polyoxyalkylen-Subblöcke gleich sind und xx eine ganze Zahl von 1 bis 500 ist.

50. Verwendung eines Polymers nach Anspruch 39 oder 40 zur Herstellung eines ophthalmischen Mittels.

51. Mittel nach Anspruch 24, worin das Monomer der Formel I die Formel VII hat,

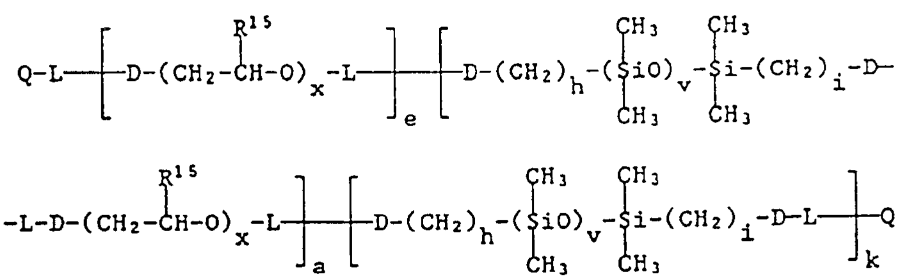

(VII)

worin Q für

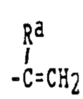

steht und L für B-R-B' oder B-R, eines von e und k 1 ist, das andere Null ; $R^a$ Wasserstoff oder Methyl ist ; jedes R eine divalente Arylen-Gruppe mit 6 bis 15 Kohlenstoffatomen, eine divalente $C_6$-$C_{10}$-Arylen-amino-carbonyloxy-$C_2$-$C_6$-alkylen-Gruppe ist ; oder divalente $C_3$-$C_{15}$-cycloaliphatische Gruppe ;
B und B' jeweils für

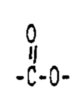

oder

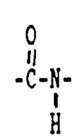

stehen ;
jedes $R^{15}$ ein Alkyl mit 1 bis 6 Kohlenstoffatomen ist, oder Mischungen davon mit Einheiten, in denen $R^{15}$ Wasserstoff ist, vorzugsweise mit der Maßgabe, daß $R^{15}$ in nicht mehr als etwa 75% irgendeiner Einheit Wasserstoff sein kann ; jedes x 54-200 ist ; v 2-66 ist, i und h unabhängig 2, 3 oder 4 sind ; und a eine ganze Zahl von 1-10 ist.

**Patentansprüche für den Vertragsstaat : ES**

1. Optisch klares, benetzbares, flexibles, sauerstoffdurchlässiges ophthalmisches Mittel, hergestellt aus einem Polymer aus einem vernetzbaren Monomer mit einem Segment S″ der Formel

$$-(W\text{-}S'\text{-}L\text{-}D\text{-}A\text{-}L)_a \quad \text{(IA)}$$

worin a 1 bis 10 ist ; jedes D unabhängig Sauerstoff oder $-N(R^9)-$ ist ; jedes W eine Einfachbindung, Sauerstoff oder $-N(R^9)-$ ist ; jedes S′ unabhängig ein Segment mit der Formel II ist,

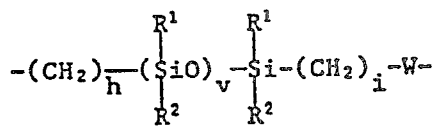

(II)

jedes h und i eine ganze Zahl von 1 bis 6 ist, v eine ganze Zahl von 2-300 ist ;
$R^1$ und $R^2$ unabhängig Alkyl mit bis zu 18 Kohlenstoffatomen oder Aryl mit bis zu 12 Kohlenstoffatomen sind, jedes L unabhänig –BRB′–, –BR–, –RB′– oder –R– ist ; jedes von B und B′ ausgewählt wird aus

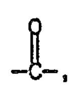 , 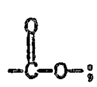 ; und 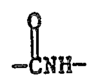

wobei die Carbonylgruppe an A, S′ oder D gebunden ist ; jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann ;
b) einer divalenten 5-7 gliedrigen cycloaliphatischen Gruppe mit 5 bis 25 Kohlenstoffatomen und einer divalenten 5-7 gliedrigen cycloaliphatischen-$C_1$-$C_{20}$-aliphatischen Gruppe ;
c) einer divalenten Arylengruppe mit 6-25 Kohlenstoffatomen ; und
d) einer divalenten Aralkyl- oder Alkarylgruppe mit 7 bis 25 Kohlenstoffatomen ;
e) einem divalenten Alkylen-Aryl-Alkylen mit 8 bis 30 Kohlenstoffatomen,
worin die Gruppen b), d) und e) wahlweise im nicht-cyclischen Teil unterbrochen sein können durch die gleichen Gruppen wie in Gruppe a), und worin die Arylringe in den Gruppen c), d) und e) weiters substituiert sein können mit einem oder mehreren Substituenten, die ausgewählt werden aus Halogen, $C_1$-$C_4$-Alkyl und $C_1$-$C_{12}$-Perhaloalkyl ;
und jedes A unabhängig ein polymerer Block von Poly-$C_2$-$C_8$-oxyalkylen der Formel III ist,

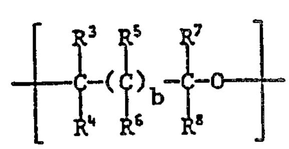

(III)

wovon zumindest 30% der A-Blöcke innerhalb irgendeines Polymers
a) Homopolymere von Oxyalkylen mit nicht mehr als 15 Oxyalkylen-Einheiten, oder
b) Blockcopolymere von Oxyalkylenen mit homopolymeren Subblöcken von nicht mehr als 15 Oxyalkylen-Einheiten sind ;
wobei jede Gruppe A insgesamt 1-1000 Oxyalkylen-Einheiten hat, in welcher Formel b unabhängig Null bis 4 ist, der endständige Sauerstoff in jeder Einheit der Formel III durch $-NR^9-$ ersetzbar ist, jedes von

$R^3$, $R^4$, $R^7$ und $R^8$ unabhängig ausgewählt wird aus der Gruppe bestehend aus Wasserstoff, Halogen, einem aliphatischen, aromatischen oder heterocyclischen Rest, der ausgewählt wird aus : unsubstituiertem $C_1$-$C_{16}$-Alkyl ; substituiertem $C_1$-$C_{16}$-Alkyl ; unsubstituiertem $C_2$-$C_{16}$-Alkenyl ; und substituiertem $C_2$-$C_{16}$-Alkenyl ; wobei die Alkyl- und Alkenyl-Substituenten unabhängig ausgewählt werden aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der benannten Alkyl- und Alkenyl-Substituenten seinerseits wahlweise substituiert ist durch $C_1$-$C_6$-Alkyl, Fluor oder ein $C_1$-$C_6$-Alkoxy, vorausgesetzt, daß das zuletzt angeführte Alkoxy nicht an ein Kohlenstoffatom gebunden ist, das schon einfach an ein anderes Sauerstoffatom gebunden ist ; $R^3$, $R^4$, $R^7$ und $R^8$ weiters unabhängig ausgewählt werden aus Aryl mit bis zu 10 Kohlenstoffatomen, $C_3$-$C_8$-Cycloalkyl und Oxacycloalkyl mit bis zu 7 Kohlenstoffatomen, wovon jedes unsubstituiert oder weiter substituiert sein kann mit einem Substituenten, der ausgewählt wird aus der Gruppe von Substituenten für das genannte Alkyl, die oben dargelegt ist ;

jedes $R^5$ und $R^6$ ausgewählt wird aus der gleichen Gruppe, die oben für $R^3$ angeführt ist ; und $R^5$ und $R^6$ weiters unabhängig ausgewählt werden aus $C_1$-$C_{16}$-Alkoxycarbonyl, $C_2$-$C_{16}$-Alkanoyloxy, $C_2$-$C_{16}$-Alkenyloxycarbonyl und $C_3$-$C_{16}$-Alkenoyloxy, wovon jedes unsubstituiert ist oder substituiert durch Fluor, Aryl mit bis zu 10 Kohlenstoffatomen oder $C_1$-$C_{16}$-Alkoxy, und $R^5$ und $R^6$ weiters unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, wovon jedes weiter substituiert sein kann durch Fluor, $C_1$-$C_6$-Alkyl oder $C_1$-$C_6$-Alkoxy, vorausgesetzt, daß jeder Substituent, der ein Sauerstoffatom als Verbindung zum Rest des Moleküls hat, nicht ein Substituent an demselben Kohlenstoffatom sein darf, das einfach an ein anderes Sauerstoffatom gebunden ist ; weiters können zwei benachbarte Gruppen, ausgewählt unter $R^3$ bis $R^8$, zusammen mit den Atomen, an die sie gebunden sind, einen 5-8 gliedrigen Cycloalkyl-, 5-8 gliedrigen Oxacycloalkyl- oder Bicycloalkylring bilden; und jedes $R^9$ wird unabhängig ausgewählt aus Wasserstoff, $C_1$-$C_4$-Alkyl und Phenyl, wobei besagtes Mittel einen anwachsenden Kontaktwinkel von weniger als 60° hat und ein Dk (× $10^{-10}$ mm · ml $O_2$/cm$^2$ · s · mmHg) von wenigstens etwa 7 und einen Wassergehalt von wenigstens 10% im gequollenen Zustand in der wäßrigen Umgebung der Anwendung.

2. Mittel nach Anspruch 1, worin das Polymer ein Copolymer ist aus genanntem Monomer mit einem Segment der Formel Ia und einem hydrophilen Modifizierungsmonomer in einer Menge, die ausreichend ist, um den Wassergehalt des Polymers im gequollenen Zustand in wäßrigen Milieu der Anwrendung auf wenigstens 10% zu halten, wobei besagtes hydrophiles modifizierendes Monomer ausgewählt wird aus

aa) Polyethylenglycolen der Formel

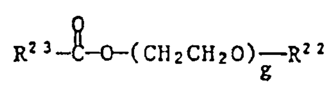

(A)

oder ab) Pyrrolidonen der Formel

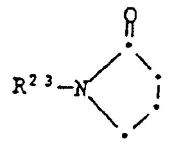

(B)

worin $R^{22}$ Wasserstoff oder $C_1$-$C_7$-Alkyl ist, g eine ganze Zahl von 1-25 ist,

oder ac) einer Verbindung der Formel

$(R^{24}\text{-div})_{nz}Hy$ (C)

worin $R^{23}$ eine polymerisierbare oder reaktive Einheit ist, die ausgewählt wird aus i) ethylenisch ungesättigten Resten, ii) Anhydriden, iii) Aminen, iv) Säuren, v) Estern, vi) Amiden, vii) Ethern, viii) Säurehalogeniden, $R^{24}$ ausgewählt wird aus den Bedeutungen für $R^{23}$ und ix) Epoxygruppen, x) Isocyanaten und Isothiocyanaten und xi) Hydroxy ;

div ausgewählt wird unter

ba) einer divalenten aliphatischen Gruppe mit bis zu 25 Kohlenstoffatomen, die auch durch Oxy, Carbonyloxy, Amino, Aminocarbonyl, Oxycarbonyl, Ureido, Oxycarbonylamino oder Carbonylamino unterbrochen oder abgeschlossen, oder unterbrochen und abgeschlossen sein kann ;

bb) einer divalenten 5-7 gliedrigen cycloaliphatischen und 5-7 gliedrigen cycloaliphatischen-$C_1$-$C_{20}$-aliphatischen Gruppe, die auch wie oben in der Gruppe ba) unterbrochen, abgeschlossen oder unterbrochen und abgeschlossen sein kann, außer daß diese Unterbrechungen nicht innerhalb der cycloaliphatischen Teile auftreten können ;

bc) einer divalenten Arylengruppe mit 6-25 Kohlenstoffatomen, die unsubstituiert ist oder substituiert durch wenigstens einen Substituenten, der ausgewählt wird unter Halogen, $C_1$-$C_4$-Alkyl und $C_1$-$C_{12}$-Perhaloalkyl;

bd) einem divalenten Aralkyl oder Alkaryl oder Alkylen-aryl-alkylen mit 7-25 Kohlenstoffatomen, das im Alkylteil unterbrochen oder nicht unterbrochen ist, oder abgeschlossen, oder unterbrochen im Alkylteil und abgeschlossen mit einer unterbrechenden oder abschließenden Gruppe wie unter ba) erwähnt, und jede dieser nicht unterbrochenen, unterbrochenen und abgeschlossenen Aralkyl- und Alkarylgruppen ist weiters unsubstituiert oder substituiert durch einen unter Halogen, $C_1$-$C_4$-Alkyl und $C_1$-$C_{12}$-Perhaloalkyl gewählten Substituenten :

be)

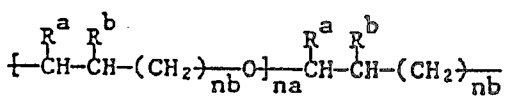

(D)

worin na eine ganze Zahl von 8-100 ist ; und

bea) $R^a$ Wasserstoff, $R^b$ Methyl und nb Null ist ; oder

beb) $R^a$ Methyl, $R^b$ Wasserstoff und nb Null ist ; oder

bec) $R^a$ und $R^b$ Wasserstoff sind und nb 1 ist ;

nz eine ganze Zahl von 1 bis zur Valenz von Hy ist, und wo nz weniger als die Valenz von Hy ist, die verbleibenden Valenzen von Hy von Wasserstoffatomen besetzt werden ;

und Hy eine hydrophile Gruppe ist, die ausgewählt wird unter

ca) Morpholino ; cyclischen Amidresten mit 5-7 Ringgliedem ; gesättigten und ungesättigten cyclischen N,N-Diamidresten mit 5-6 RigglIedern ; Gruppen der Formeln

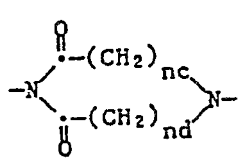

(E) oder

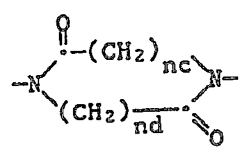

(E')

mit 6-7 Ringgliedern, worin nc und nd ausgewählt werden unter 0-2 ; und cyclischen Aminen mit 5-6 Ringgliedern ; jedes unsubstituiert oder substituiert durch Hydroxy-$C_1$-$C_5$-alkyl, Carboxy oder niederes Alkyl ;

cb) Tetrahydrofurfuryl ;

cc) Mono-, Di- oder Polysaccharidresten, geradkettig oder cyclisch, ihren entsprechenden Zuckeralkoholresten, Pentaerythritresten und Polyvinylalkoholresten ;

cd) Polyhydroxy-$C_2$-$C_7$-alkylresten,

3. Mittel nach Anspruch 1, worin a 1 ist.

4. Mittel nach Anspruch 1, worin jedes D und W Sauerstoff ist.

5. Mittel nach Anspruch 1, worin jedes L gleich –BRB'–, jedes B gleich –C(O)NH– ist, wobei das Stickstoffatom an R gebunden ist, und jedes

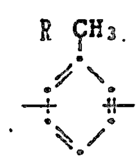

ist.

6. Mittel nach Anspruch 5, worin R für

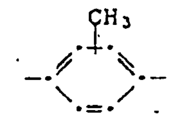 steht.

7. Mittel nach Anspruch 1, worin jedes $R^1$ und $R^2$ Methyl ist.

8. Mittel nach Anspruch 1, worin h und i jeweils 4 sind.

9. Mittel nach Anspruch 1, worin v etwa 15 bis etwa 50 beträgt.

10. Mittel nach Anspruch 7, worin h 4 ist ; i 4 ist ; und v etwa 15 bis etwa 50 beträgt.

11. Mittel nach Anspruch 1, worin a) jedes b 1 ist und $R^3$-$R^8$ alle Wasserstoff sind oder b) jedes b Null ist, jedes $R^3$, $R^4$ und $R^8$ Wasserstoff, und jedes $R^7$ Methyl ist.

12. Benetzbares, flexibles sauerstoffdurchlässiges ophthalmisches Mittel nach Anspruch 1, wobei das vernetzbare Monomer

a) eine Teilformel

$$-(D\text{-}A\text{-}L\text{-}S'')_c- \quad (IB)$$

hat, worin jedes S″ unabhängig ein Segment der Formel Ia von Anspruch 1 ist ; jedes D, A und L unanhängig wie im Anspruch 1 definiert ist, c 1-10 beträgt ; und a mal c 1-10 ist ; oder

b) eine Teilformel

$$-(S'')_c\text{-}D\text{-}S'\text{-}La- \quad (IC)$$

hat, worin jedes S″ unabhängig ein Segment der Formel Ia von Anspruch 1 ist ; D und S′ wie im Anspruch 1 definiert sind ; C 1-10 ist und La ausgewählt wird aus –BRB′– und –BR–.

13. Mittel nach Anspruch 12, worin a 1 ist.

14. Mittel nach Anspruch 12, worin jedes D und W Sauerstoff ist.

15. Mittel nach Anspruch 12, worin jedes L für –BRB′– steht, jedes B für –C(O)NH–, wobei das Stickstoffatom an R gebunden ist, und R für

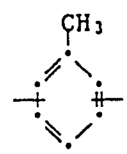 steht.

16. Mittel nach Anspruch 12, worin R für

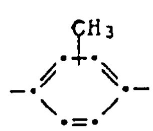 steht.

17. Mittel nach Anspruch 12, worin jedes $R^1$ und $R^2$ Methyl ist.

18. Mittel nach Anspruch 12, worin h und i jeweils 4 sind.

19. Mittel nach Anspruch 12, worin v etwa 15 bis etwa 50 beträgt.

20. Mittel nach Anspruch 17, worin h 4 ist ; i 4 ist ; und v etwa 15 bis etwa 50 beträgt.

21. Mittel nach Anspruch 12, worin a) jedes b 1 ist und $R^3$-$R^8$ alle Wasserstoff sind, oder b) jedes b Null ist, jedes $R^3$, $R^4$ und $R^8$ Wasserstoff und jedes $R^7$ Methyl ist.

22. Mittel nach Anspruch 14, worin c 1 ist.

23. Mittel nach Anspruch 12, worin La für –BRB′– steht.

24. Benetzbares flexibles sauerstoffdurchlässiges ophthalmisches Mittel nach Anspruch 13, wobei das Monomer die Formel

$$L'-[-(D-A-L)_e-S''-]_c-L'' \qquad (I)$$

hat, worin e gleich Null oder 1 ist; jedes D, A, L, S″ und c unabhängig wie im Anspruch 1 definiert ist; L′ für Wasserstoff, P′-BRB′–, P′-RB′–, P′-BR– oder P′-R– steht;
L″ für Wasserstoff, P′ oder, im Falle daß e Null ist, auch für –D-S′-La-P′– steht;
wobei La wie im Anspruch 12 definiert ist;
und P′ für Wasserstoff, Amino, Hydroxy, NCO, NCS, Vinyl oder eine Einheit steht, welche eine vernetzbare Gruppe enthält, die vernetzt werden kann, wenn mit einem geeigneten Vernetzungsmittel coreagiert oder wenn mit wirksamer Strahlung bestrahlt wird.

25. Mittel nach Anspruch 24, worin a 1 ist.

26. Mittel nach Anspruch 24, worin jedes D und W Sauerstoff ist.

27. Mittel nach Anspruch 24, worin jedes L für –BRB′–, jedes B für –C(O)NH–, worin das Stickstoffatom an R gebunden ist, und R für

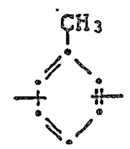 steht.

28. Mittel nach Anspruch 24, worin R für

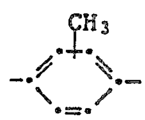 steht.

29. Mittel nach Anspruch 24, worin jedes $R^1$ und $R^2$ Methyl ist.

30. Mittel nach Anspruch 24, worin h und i jeweils 4 sind.

31. Mittel nach Anspruch 24, worin v etwa 15 bis etwa 50 beträgt.

32. Mittel nach Anspruch 29, worin h 4 ist; i 4 ist; und v etwa 15 bis etwa 50 beträgt.

33. Mittel nach Anspruch 24, worin a) jedes b 1 und $R^3$-$R^8$ alle Wasserstoff sind, oder b) jedes b Null ist, jedes $R^3$, $R^4$ und $R^8$ Wasserstoff und jedes $R^7$ Methyl ist.

34. Mittel nach Anspruch 24, worin c 1 ist.

35. Mittel nach Anspruch 24, worin L′ für P′-BRB′– steht.

36. Mittel nach Anspruch 24, worin La für –BRB′– steht.

37. Mittel nach Anspruch 24, worin jedes P′

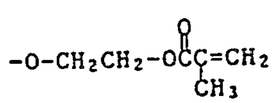 , 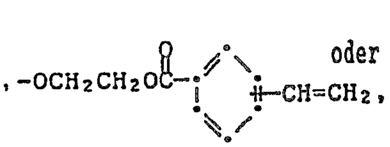 , oder 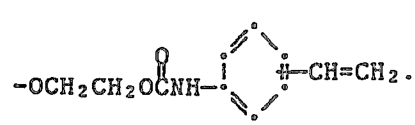 ist.

38. Mittel nach Anspruch 1, die eine Kontaktlinse ist.

39. Verfahren zur Herstellung eins optisch klaren, benetzbaren, flexiblen, sauerstoffdurchlässigen, Polymers aus einem vernetzbaren Monomer mit einem Segment S″ der Formel

$$-(W\text{-}S'\text{-}L\text{-}D\text{-}A\text{-}L)_a \qquad (IA)$$

worin alle Variablen die im Anspruch 1 angegebene Bedeutung haben, das Polymer einen anwachsenden Kontaktwinkel von weniger als 60° und ein Dk ($\times 10^{-10}$ mm · ml $O_2$/cm$^2$ · s · mmHg) von wenigstens etwa 7 und einen Wassergehalt von wenigstens 10% im gequollenen Zustand im wäßrigen Milieu der Anwendung hat, durch Umsetzung der erforderlichen Zwischenprodukte auf an sich bekannte Weise.

40. Verfahren nach Anspruch 39, worin das genannte Polymer ein Copolymer ist aus dem Monomer mit einem Segment der Formel Ia und einem hydrophilen modifizierenden Monomer in einer Menge, die ausreichend ist, um den Wassergehalt des genannten Polymers in seinem gequollenen Zustand im wäßrigen Milieu der Anwendung auf wenigstens 10% zu halten, wobei besagtes hydrophiles modifizierendes Monomer aus den Monomeren gewählt wird, wie sie im Anspruch 2 spezifiziert sind.

41. Mittel nach Anspruch 2, worin das hydrophile modifizierende Monomer aus der Gruppe der Formel

$$(R^{24}\text{-div})_{nz}Hy \quad (C)$$

ausgewählt wird.

42. Verfahren nach Anspruch 40, worin das hydrophile modifizierende Monomer aus der Gruppe der Formel

$$(R^{24}\text{-div})_{nz}Hy \quad (C)$$

ausgewählt wird.

43. Mittel nach Anspruch 1, worin wenigstens 50% der polymeren A-Blöcke nicht mehr als 15 Oxyalkylen-Einheiten pro homopolymerem Subblock haben.

44. Mittel nach Anspruch 43, worin wenigstens 70% der polymeren A-Blöcke nicht mehr als 15 Oxyalkylen-Einheiten pro homopolymerem Subblock haben.

45. Mittel nach Anspruch 44, worin 100% der polymeren A-Blöcke nicht mehr als 15 Oxyalkylen-Einheiten pro homopolymerem Subblock haben.

46. Mittel nach Anspruch 1, worin in den genannten A-Blöcken mit nicht mehr als 15 Oxyalkylen-Einheiten pro homopolymerem Subblock dieser homopolymere Subblock nicht mehr als 10 Oxyalkylen-Einheiten pro homopolymerem Subblock hat.

47. Mittel nach Anspruch 1, worin in den genannten A-Blöcken mit nicht mehr als 15 Oxyalkylen-Einheiten pro homopolymerem Subblock dieser homopolymere Subblock nicht mehr als 7 Oxyalkylen-Einheiten pro homopolymerem Subblock hat.

48. Mittel nach Anspruch 1, worin innerhalb der A-Blöcke mit nicht mehr als 15 Oxyalkylen-Einheiten pro homopolymerem Subblock dieser homopolymere Subblock nicht mehr als 4 Oxyalkylen-Einheiten pro homopolymerem Subblock hat.

49. Mittel nach Anspruch 1, worin diese A-Gruppen, die auf nicht mehr als 15 Oxyalkylen-Einheiten pro homopolymerem Subblock limitiert sind, die Formel

$$[-\text{Polyoxyalkylen}_1\text{-Polyoxyalkylen}_2-]_{xx}$$

haben, in der jedes Polyoxyalkylen$_1$ und Polyoxyalkylen$_2$ unabhängig ein Homopolymer ist aus $C_2$-$C_5$-Oxyalkylen, jedes Homopolymer nicht mehr als 15 Oxyalkylen-Einheiten hat und keine zwei benachbarten Polyoxyalkylen-Subblöcke gleich sind und xx eine ganze Zahl von 1 bis 500 ist.

50. Verwendung eines Polymers nach Anspruch 39 oder 40 zur Herstellung eines ophthalmischen Mittels.

51. Mittel nach Anspruch 24, worin das Monomer der Formel I die Formel VII hat,

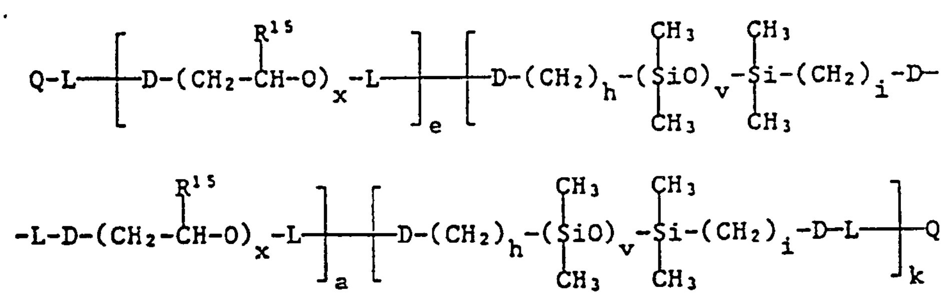
(VII)

worin Q für

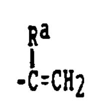

steht und L für B-R-B' oder B-R, eines von e und k 1 ist, das andere Null ; $R^a$ Wasserstoff oder Methyl ist ;

jedes R eine divalente Arylen-Gruppe mit 6 bis 15 Kohlenstoffatomen, eine divalente $C_6$-$C_{10}$-Arylen-amino-carbonyloxy-$C_2$-$C_6$-alkylen-Gruppe ist ; oder divalente $C_3$-$C_{15}$-cycloaliphatische Gruppe ;
B und B′ jeweils für

$$-\overset{O}{\overset{\|}{C}}-O- \text{ oder } -\overset{O}{\overset{\|}{C}}-\underset{H}{\underset{|}{N}}- \text{ stehen;}$$

jedes $R^{15}$ ein Alkyl mit 1 bis 6 Kohlenstoffatomen ist, oder Mischungen davon mit Einheiten, in denen $R^{15}$ Wasserstoff ist, vorzugsweise mit der Maßgabe, daß $R^{15}$ in nicht mehr als etwa 75% irgendeiner Einheit Wasserstoff sein kann ; jedes x 54-200 ist ; v 2-66 ist, i und h unabhängig 2, 3 oder 4 sind ; und a eine ganze Zahl von 1-10 ist.

## Revendications

**Revendications pour les Etats contractants : AT, BE, CH, DE, FR, GB, GR, IT, LI, LU, NL, SE**

1. Dispositif ophtalmique perméable à l'oxygène, flexible, mouillable, optiquement clair, fabriqué à partir d'un polymère d'un monomère réticulable ayant un segment S″ de formule

$$-(W-S'-L-D-A-L)_{a}- \qquad (Ia)$$

où a vaut de 1 à 10 ;
chaque D représente indépendamment un oxygène ou $-N(R^9)-$ ;
chaque W représente une liaison simple, un oxygène ou $-N(R^9)-$ ;
chaque S′ représente indépendamment un segment de formule II,

$$-(CH_2)_h-(\underset{R^2}{\overset{R^1}{Si}}O)_v-\underset{R^2}{\overset{R^1}{Si}}-(CH_2)_i-W- \qquad (II)$$

chaque h et i est un nombre entier valant de 1 à 6, v est un nombre entier valant de 2 à 300,
$R^1$ et $R^2$ représentent indépendamment un alcoyle allant jusqu'à 18 atomes de carbone, ou un aryle allant jusqu'à 12 atomes de carbone,
chaque L représente indépendamment –BRB′–, –BR–, –RB′– ou –R– ;
chaque B et B′ est choisi parmi

$$-\overset{O}{\overset{\|}{C}}-, \quad -\overset{O}{\overset{\|}{C}}-O-; \quad \text{et} \quad -\overset{O}{\overset{\|}{C}}NH-$$

avec le groupe carbonyle lié à A, S′ ou D ;
chaque R est indépendamment un groupe de liaison bivalent choisi parmi

a) un groupe aliphatique bivalent allant jusqu'à 25 atomes de carbone qui peut être interrompu par un oxy, carbonyloxy, amino, aminocarbonyle, oxycarbonyle, uréido, oxycarbonylamino, ou carbonylamino ;
b) un groupe cycloaliphatique à 5 à 7 chaînons ayant de 5 à 25 atomes de carbone et un groupe aliphatique en $C_{1-20}$ cyclaliphatique à 5 à 7 chaînons bivalent ;
c) un groupe arylène bivalent ayant de 6 à 25 atomes de carbone ; et
d) un groupe aralcoyle ou alcaryle bivalent ayant de 7 à 25 atomes de carbone ;
e) un alcoylène-aryl-alcoylène bivalent ayant de 8 à 30 atomes de carbone, où les groupes b), d) et e) peuvent également être interrompus dans les parties non cycliques par les mêmes groupes que dans le groupe a) et où les noyaux aryle dans les groupes c), d) et e) peuvent être encore substitués par un ou plusieurs

substituants choisis parmi halogène, alcoyle en $C_{1-4}$ et perhaloalcoyle en $C_{1-12}$ ; et chaque A représente indépendamment une séquence polymérique de poly-oxyalcoylène en $C_{2-6}$ de formule III, dont au moins 30% des séquences A dans un polymère quelconque sont des a) homopolymères d'oxyalcoylène n'ayant pas plus de 15 unités oxyalcoylène, ou b) copolymères séquencés d'oxyalcoylènes ayant des sous-séquences homopolymériques ne comportant pas plus de 15 unités oxyalcoylène, chaque groupe A ayant un total de 1 à 1000 unités oxyalcoylène, dans laquelle formule b vaut indépendamment de 0 à 4, l'oxygène terminal dans chaque unité de formule III étant remplaçable par $-NR^9-$, chacun des radicaux $R^3$, $R^4$, $R^7$ et $R^8$ est indépendamment choisi dans le groupe constitué par hydrogène, halogène, un radical aliphatique, aromatique, ou hétérocyclique choisi parmi : les alcoyles en $C_{1-16}$ non substitués ; les alcoyles en $C_{1-16}$ substitués ; les alcényles en $C_{2-16}$ non substitués ; et les alcényles en $C_{2-16}$ substitués ; où les substituants alcoyle et alcényle sont indépendamment choisis parmi alcoxycarbonyle en $C_{1-16}$, alcényloxycarbonyle en $C_{2-16}$, fluoro, aroyle allant jusqu'à 10 atomes de carbone, alcoxy en $C_{1-16}$, alcanoyloxy en $C_{1-16}$, aryloxy allant jusqu'à 10 atomes de carbone, alcénoyloxy en $C_{3-6}$, aroyle allant jusqu'à 10 atomes de carbone, aroyloxy allant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)-oxy-carbonyle, chacun desdits substituants alcoyle et alcényle étant à son tour éventuellement substitué par un alcoyle en $C_{1-6}$, un fluoro ou un alcoxy en $C_{1-6}$ à condition que ledit alcoxy mentionné en dernier ne soit pas lié à un atome de carbone déjà lié par une liaison simple à un autre atome d'oxygène ; $R^3$, $R^4$, $R^7$ et $R^8$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit alcoyle exposé ci-dessus ; chaque $R^5$ et $R^6$ est choisi dans le même groupe que celui exposé ci-dessus pour $R^3$ ; et $R^5$ et $R^6$ sont choisis parmi alcoxy en $C_{1-16}$-carbonyle, alcanoyloxy en $C_{2-16}$, alcényloxy en $C_{2-16}$ -carbonyle, et alcénoyloxy en $C_{3-16}$, dont chacun est non substitué ou substitué par un fluoro, un aryle ayant jusqu'à 10 atomes de carbone, ou un alcoxy en $C_{1-16}$, et $R_5$ et $R_6$ sont encore indépendamment choisis parmi aryloxy ayant jusqu'à 10 atomes de carbone, cycloalcoxy ayant jusqu'à 8 atomes de carbone, cycloalcoyle (jusqu'à 8 atomes de carbone)-carbonyloxy, cycloalcoxy (jusqu'à 8 atomes de carbone)-carbonyle, aroyloxy ayant jusqu'à 11 atomes de carbone, oxacycloalcoxy ayant jusqu'à 7 atomes de carbone, oxacycloalcényloxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy, et aryloxy (jusqu'à 10 atomes de carbone)carbonyle, dont chacun peut être encore substitué par un fluoro, alcoyle en $C_{1-6}$ ou alcoxy en $C_{1-6}$, à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^8$, ensemble avec les atomes auxquels ils sont attachés, peuvent former un noyau cycloalcoyle à 5 à 8 chaînons, oxycycloalcoyle à 5 à 8 chaînons ou bicycloalcoyle à 5 à 8 chaînons ; et chaque $R^9$ est indépendamment choisi parmi hydrogène, alcoyle en $C_{1-4}$ et phényle ledit dispositif ayant un angle de contact aigü inférieur à 60° et ayant un Dk($\times 10^{-10}$ mm $\cdot$ ml $O_2$ /cm²-sec $\cdot$ mmHg) d'au moins environ 7, et une teneur en eau d'au moins 10% à l'état gonflé dans l'environnement aqueux d'utilisation.

2. Dispositif de la revendication 1, dans lequel ledit polymère est copolymère dudit monomère ayant un segment de formule Ia et un monomère modifiant hydrophile en une quantité suffisante pour maintenir la teneur en eau dudit polymère à son état gonflé dans son environnement aqueux d'utilisation à au moins 10%, ledit monomère modifiant hydrophile étant choisi parmi

aa) les polyéthylène glycols de formule

$$R^{23}-\overset{O}{\overset{\|}{C}}-O-(CH_2CH_2O)_g-R^{22} \qquad (A)$$

ou

ab) les pyrrolidones de formule

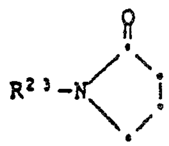

(B)

où $R^{22}$ est un hydrogène ou un alcoyle en $C_{1-7}$, g est un nombre entier allant de 1 à 25,
ou
ac) un composé de formule

$$(R^{24}\text{-div})_{nz}Hy \quad (C)$$

où $R^{23}$ est une fraction polymérisable ou réactive choisie parmi i) les radicaux éthyléniquement insaturés, ii) les anhydrides, iii) les amines, iv) les acides, v) les esters, vi) les amides, vii) les éthers, viii) les halogénures d'acides. $R^{24}$ est choisi parmi les significations données pour $R^{23}$ et ix) les groupes époxy, x) les isocyanates et isothiocyanates, et xi) hydroxy ;
div est choisi parmi
ba) un groupe aliphatique bivalent ayant jusqu'à 25 atomes de carbone, qui peut également être interrompu, ou terminé ou interrompu et terminé par un oxy, carbonyloxy, amino, aminocarnonyle, oxycarbonyle, uréido, oxycarbonylamino, ou carbonylamino ;
bb) un groupe cycloaliphatique à 5 à 7 chaînons bivalent et un groupe cycloaliphatique-aliphatique en $C_{1-20}$ à 5 à 7 chaînons qui peut également être interrompu, terminé, ou interrompu et terminé comme dans le groupe ba) ci-dessus, sauf que lesdites interruptions ne peuvent se produire dans lesdites parties cycloaliphatiques ;
bc) un groupe arylène bivalent ayant de 6 à 25 atomes de carbone, qui est non substitué ou substitué par au moins un substituant choisi parmi halogène, alcoylène en $C_{1-4}$ et perhaloalcoyle en $C_{1-12}$ ;
bd) un aralcoyle ou alkaryle ou alcoylèn-aryl-alcoylène bivalent ayant de 7 à 25 atomes de carbone, qui est non interrompu ou interrompu par la partie alcoyle, ou interrompu dans la partie alcoyle, ou terminé, ou interrompu dans la partie alcoyle et terminé avec un groupe interrupteur ou terminant tel que mentionné en ba) ci-dessus, et chacun desdits groupes aralcoyle et alkaryle non interrompus, interrompus et terminés est en outre non substitué ou substitué par un substituant choisi parmi halogène, alcoyle en $C_{1-4}$ et perhaloalcoyle en $C_{1-12}$ ;
be)

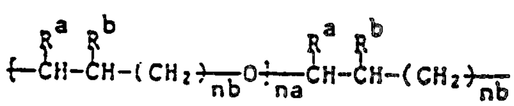

(D)

où na est un nombre entier valant de 8 à 100 ; et
bea) $R^a$ est un hydrogène, $R^b$ est un méthyle, et nb vaut zéro ; ou
beb) $R^a$ est un méthyle, $R^b$ est un hydrogène et nb vaut zéro ; ou
bec) $R^a$ et $R^b$ représentent un hydrogène, et nb vaut 1 ;
nz est un nombre entier valant de 1 jusqu'à la valence de Hy et où nz est inférieur à la valence de Hy, les valences restantes de Hy étant prises par des hydrogènes ;
et Hy est un groupe hydrophile choisi parmi
ca) morpholino ; des radicaux amide cycliques à 5 à 7 chaînons ; des radicaux N,N-diamide cycliques saturés et non saturés à 5 à 6 chaînons ; des groupes de formule

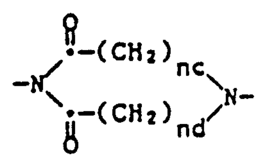 (E) ou 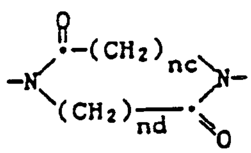 (E')

ayant de 6 à 7 chaînons où nc et nd sont choisis parmi 0-2 ; et les amines cycliques de 5 à 6 chaînons ; chacun étant non substitué ou substitué par un hydroxy-alcoyle en $C_{1-5}$, carboxy ou alcoyle inférieur ;
cb) tétrahydrofurfuryle ;
cc) des radicaux mono-, di-, et polysaccharide, qu'ils soient à chaîne droite ou cycliques, leurs radicaux alcool sucre correspondants, les radicaux pentaérythritol, et les radicaux alcool polyvinylique ;
cd) les radicaux polyhydroxy-alcoyle en $C_{2-7}$.

3. Dispositif de la revendication 1 dans lequel a vaut 1.

4. Dispositif de la revendication 1, dans lequel chaque D et W est un oxygène.

5. Dispositif de la revendication 1, où chaque L représente –BRB'–, chaque B représente –C(O)NH– où l'atome d'azote est lié à R, et R représente

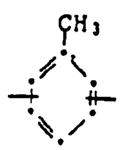

6. Dispositif de la revendication 5, dans lequel R représente

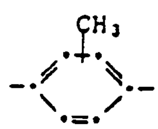

7. Dispositif de la revendication 1, dans lequel chaque $R^1$ et $R^2$ est un méthyle.

8. Dispositif de la revendication 1, dans lequel h et i valent chacun 4.

9. Dispositif de la revendication 1, dans lequel v vaut d'environ 15 à environ 50.

10. Dispositif de la revendication 7, dans lequel h vaut 4 ; i vaut 4 ; et v vaut d'environ 15 à environ 50.

11. Dispositif de la revendication 1, dans lequel
a) chaque b vaut 1 et $R^3$-$R^8$ sont tous des hydrogènes ou
b) chaque b vaut 0, chaque $R^3$, $R^4$ et $R^8$ est un hydrogène, et chaque $R^7$ est un méthyle.

12. Dispositif ophtalmique perméable à l'oxygène, flexible, mouillable, de la revendication 1, comprenant le monomère réticulable ayant
a) une formule partielle

$$-(D\text{-}A\text{-}L\text{-}S'')_c \quad \text{(IB)}$$

où chaque S" est indépendamment un segment de formule Ia de la revendication 1 ; chaque D, A et L est indépendamment tel que défini dans la revendication 1 ; c vaut de 1 à 10 ; et a multiplié par c vaut de 1 à

10 ; ou

b) une formule partielle

$$-(S'')_c\text{-}D\text{-}S'\text{-}La- \quad (IC)$$

où chaque S″ est indépendamment un segment de formule Ia de la revendication 1 ; D et S′ sont tels que définis dans la revendication 1 ; c vaut 1-10 et La est choisi parmi –BRB′– et –BR–.

13. Dispositif de la revendication 12, où a vaut 1.

14. Dispositif de la revendication 12, où chaque D et W est un oxygène.

15. Dispositif de la revendication 12, où chaque L représente –BRB′–, chaque B représente –C(O)NH– où l'atome d'azote est lié à R, et R représente

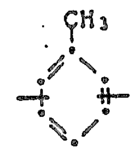

16. Dispositif de la revendication 12, où R représente

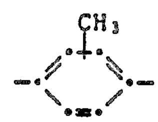

17. Dispositif de la revendication 12, où chaque $R^1$ et $R^2$ est un méthyle.

18. Dispositif de la revendication 12, où h et i valent chacun 4.

19. Dispositif de la revendication 12, où v vaut d'environ 15 à environ 50.

20. Dispositif de la revendication 17, où h vaut 4 ; i vaut 4 ; et v vaut d'environ 15 à environ 50.

21. Dispositif de la revendication 12, dans lequel

a) chaque b vaut 1 et $R^3$-$R^8$ représentent tous des hydrogènes ou

b) chaque b vaut 0, chaque $R^3$, $R^4$ et $R^8$ est un hydrogène, et chaque $R^7$ est un méthyle.

22. Dispositif de la revendication 14, où c vaut 1.

23. Dispositif de la revendication 12, où La représente –BRB′–.

24. Dispositif ophtalmique perméable à l'oxygène, flexible, mouillable, de la revendication 13, le monomère étant de formule

$$L'\text{-}\left[(D\text{-}A\text{-}L)_e\text{-}S''\right]_c\text{-}L'' \qquad (I)$$

où e vaut 0 ou 1 ;
chaque D, A, L, S″ et c est indépendamment tel que défini dans la revendication 1 ;
L′ est un hydrogène, P′-BRB′–, P′-RB′–, P′-BR–, ou P′-R– ;
L″ est un hydrogène, P′, ou, dans le cas où e vaut 0, également –D-S′-La-P′ ;
La étant tel que défini dans la revendication 12 ; et P′ est un hydrogène, amino, hydroxy, NCO, NCS, vinyle ou une fraction contenant un groupe réticulable qui peut être réticulée lorsqu'on la fait coagir avec un agent de réticulation approprié ou lorsqu'on l'irradie par un rayonnement actinique.

25. Dispositif de la revendication 24, où a vaut 1.

26. Dispositif de la revendication 24, dans lequel chaque D et W est un oxygène.

27. Dispositif de la revendication 24, où chaque L représente –BRB′–, chaque B représente –C(O)NH–, où l'atome d'azote est lié à R et R représente

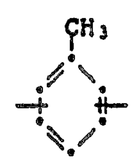

28. Dispositif de la revendication 24, où R représente

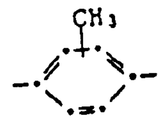

29. Dispositif de la revendication 24, où chaque $R^1$ et $R^2$ est un méthyle.

30. Dispositif de la revendication 24, où h et i valent chacun 4.

31. Dispositif de la revendication 24, où v vaut d'environ 15 à environ 50.

32. Dispositif de la revendication 29, où h vaut 4 ; i vaut 4 ; et v d'environ 15 à environ 50.

33. Dispositif de la revendication 24, où

a) chaque b vaut 1 et $R^3$-$R^8$ représentent tous un hydrogène ou

b) chaque b vaut 0, chaque $R^3$, $R^4$ et $R^8$ est un hydrogène, et chaque $R^7$ est un méthyle.

34. Dispositif de la revendication 24 où c vaut 1.

35. Dispositif de la revendication 24 où L' représente P'-BRB'–.

36. Dispositif de la revendication 24, où La représente –BRB'–.

37. Dispositif de la revendication 24, où chaque P' représente

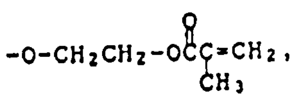 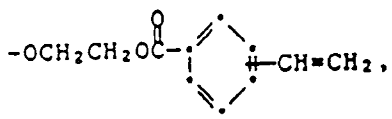 ou

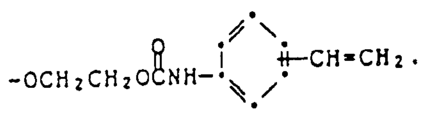

38. Dispositif de la revendication 1, qui est une lentille de contact.

39. Polymère perméable à l'oxygène, flexible, mouillable, optiquement clair d'un monomère réticulable ayant un segment S" de formule

$$-(W-S'-L-D-A-L)_{a}- \qquad (Ia)$$

où toutes les variables ont la signification spécifiée dans la revendication 1, ledit polymère ayant un angle de contact aigû inférieur à 60° et ayant un Dk($\times 10^{-10}$ mm · ml $O_2$ /$cm^2$ · sec · mmHg) d'au moins environ 7, et une teneur en eau d'au moins 10% à l'état gonflé dans son environnement aqueux d'utilisation.

40. Polymère de la revendication 39, dans lequel ledit polymère est un copolymère dudit monomère ayant un segment de formule la et un monomère modifiant hydrophile en une quantité suffisante pour maintenir la teneur en eau dudit polymère à l'état gonflé dans son environnement aqueux d'utilisation à au moins 10%, ledit monomère modifiant hydrophile étant choisi parmi les monomères tels que spécifiés dans la revendication 2.

41. Dispositif de la revendication 2, dans lequel ledit monomère modifiant hydrophile est choisi dans un groupe de formule

$$(R^{24}\text{-div})_{nz}Hy \qquad (C)$$

42. Polymère de la revendication 40 dans lequel ledit monomère modifiant hydrophile est choisi dans le groupe de formule

$$(R^{24}\text{-div})_{nz}Hy \qquad (C)$$

43. Dispositif de la revendication 1, dans lequel au moins 50% desdites séquences polymériques A n'ont pas plus de 15 unités alcoylène par sous-séquence homopolymérique.

44. Dispositif de la revendication 43, dans lequel au moins 75% desdites séquences polymériques A n'ont pas plus de 15 unités alcoylène par sous-séquence homopolymérique.

45. Dispositif de la revendication 44, dans lequel 100% des séquences polymériques A n'ont pas plus de

15 unités alcoylène par sous-séquence homopolymérique.

46. Dispositif de la revendication 1, dans lequel à l'intérieur desdites séquences A n'ayant pas plus de 15 unités oxyalcoylène par sous-séquence homopolymérique, ladite sous-séquence homopolymérique n'a pas plus de 10 unités oxyalcoylène par sous-séquence homopolymérique.

47. Dispositif de la revendication 1, dans lequel à l'intérieur desdites séquences A n'ayant pas plus de 15 unités oxyalcoylène par sous-séquence homopolymérique, ladite sous-séquence homopolymérique n'a pas plus de 7 unités oxyalcoylène par sous-séquence homopolymérique.

48. Dispositif de la revendication 1, dans lequel lesdites séquences A n'ayant pas plus de 15 unités oxyalcoylène par sous-séquence homopolymérique, ladite sous-séquence homopolymérique n'a pas plus de 4 unités oxyalcoylène par sous-séquence homopolymérique.

49. Dispositif selon la revendication 1, dans lequel lesdits groupes A qui sont limités à n'avoir pas plus de 15 unités oxyalcoylène par sous-séquence homopolymérique sont de formule

$$[-\text{polyoxyalcoylène}_1\text{-polyoxyalcoylène}_2-]_{xx}$$

où chaque polyoxyalcoylène$_1$ et polyoxyalcoylène$_2$ est indépendamment un homopolymère d'oxyalcoylène en $C_{2-5}$, chaque homopolymère n'ayant pas plus de 15 unités oxyalcoylène et aucune suite de deux sous-séquences polyoxyalcoylène adjacentes n'est identique et xx est un nombre entier valant de 1 à 500.

50. Application d'un polymère de la revendication 39 ou 40 à la fabrication d'un dispositif ophtalmique.

51. Dispositif de la revendication 24, dans lequel le monomère de formule I est de formule VII,

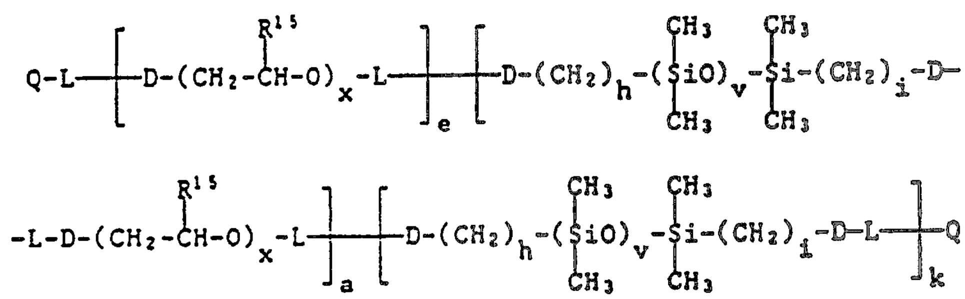

(VII)

où Q représente

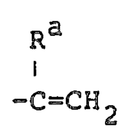

et L représente B-R-B' ou B-R,
l'un des symboles e et k vaut 1 et l'autre 0 ;
$R^a$ est un hydrogène ou un méthyle ; chaque R est un groupe arylène bivalent de 6 à 15 atomes de carbone, un arylène en $C_{6-10}$ -amino-carbonyloxy-alcoylène bivalent ou un groupe cycloaliphatique en $C_{3-15}$ bivalent ;
B et B' représentent chacun

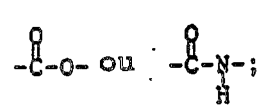

ou

chaque $R^{15}$ est un alcoyle en $C_{1-6}$, ou leurs mélanges avec les unités dans lesquelles $R^{15}$ est un hydrogène, de préférence avec cette précision que $R^{15}$ ne peut être un hydrogène dans plus d'environ 75% d'une unité quelconque ;
chaque x vaut de 4-200, v vaut de 2 à 66, i et h valent indépendamment 2, 3 ou 4 ; et a est un nombre entier allant de 1 à 10.

**Revendications pour l'Etat contractant : ES**

1. Dispositif ophtalmique perméable à l'oxygène, flexible, mouillable, optiquement clair, fabriqué à partir d'un polymère d'un monomère réticulable ayant un segment S" de formule

$$-(W-S'-L-D-A-L)_{a}- \qquad (Ia)$$

où a vaut de 1 à 10 ;
chaque D représente indépendamment un oxygène ou $-N(R^9)-$ ;
chaque W représente une liaison simple, un oxygène ou $-N(R^9)-$ ;
chaque S' représente indépendamment un segment de formule II,

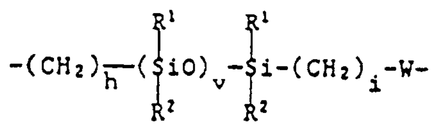

(II)

chaque h et i est un nombre entier valant de 1 à 6, v est un nombre entier valant de 2 à 300,
$R^1$ et $R^2$ représentent indépendamment un alcoyle allant jusqu'à 18 atomes de carbone, ou un aryle allant jusqu'à 12 atomes de carbone,
chaque L représente indépendamment –BRB'–, –BR–, –RB'– ou –R– ;
chaque B et B' est choisi parmi

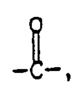, 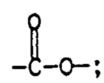; et 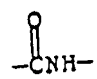

avec le groupe carbonyle lié à A, S' ou D ;
chaque R est indépendamment un groupe de liaison bivalent choisi parmi

a) un groupe aliphatique bivalent allant jusqu'à 25 atomes de carbone qui peut être interrompu par un oxy, carbonyloxy, amino, aminocarbonyle, oxycarbonyle, uréido, oxycarbonylamino, ou carbonylamino ;
b) un groupe cycloaliphatique à 5 à 7 chaînons ayant de 5 à 25 atomes de carbone et un groupe aliphatique en $C_{1-20}$ cyclaliphatique à 5 à 7 chaînons bivalent ;
c) un groupe arylène bivalent ayant de 6 a 25 atomes de carbone ; et
d) un groupe aralcoyle ou alcaryle bivalent ayant de 7 à 25 atomes de carbone ;
e) un alcoylène-aryl-alcoylène bivalent ayant de 8 à 30 atomes de carbone, où les groupes b), d) et e) peuvent également être interrompus dans les parties non cycliques par les mêmes groupes que dans le groupe a) et où les noyaux aryle dans les groupes c), d) et e) peuvent être encore substitués par un ou plusieurs substituants choisis parmi halogène, alcoyle en $C_{1-4}$ et perhaloalcoyle en $C_{1-12}$ ;
et chaque A représente indépendamment une séquence polymérique de poly-oxyalcoylène en $C_{2-6}$ de formule III,

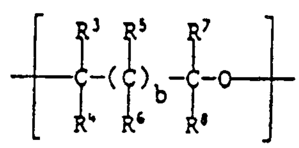

(III)

dont au moins 30% des séquences A dans un polymère quelconque sont des

a) homopolymères d'oxyalcoylène n'ayant pas plus de 15 unités oxyalcoylène, ou
b) copolymères séquencés d'oxyalcoylènes ayant des sous-séquences homopolymériques ne comportant pas plus de 15 unités oxyalcoylène,
chaque groupe A ayant un total de 1 à 1000 unités oxyalcoylène, dans laquelle formule b vaut indépendamment de 0 à 4, l'oxygène terminal dans chaque unité de formule III étant remplaçable par $-NR^9-$, cha-

cun des radicaux $R^3$, $R^4$, $R^7$ et $R^8$ est indépendamment choisi dans le groupe constitué par hydrogène, halogène, un radical aliphatique, aromatique, ou hétérocyclique choisi parmi : les alcoyles en $C_{1-16}$ non substitués ; les alcoyles en $C_{1-16}$ substitués ; les alcényles en $C_{2-16}$ non substitués ; et les alcényles en $C_{2-16}$ substitués ; où les substituants alcoyle et alcényle sont indépendamment choisis parmi alcoxycarbonyle en $C_{1-16}$, alcényloxycarbonyle en $C_{2-16}$, fluoro, aryle allant jusqu'à 10 atomes de carbone, alcoxy en $C_{1-16}$, alcanoyloxy en $C_{1-16}$, aryloxy allant jusqu'à 10 atomes de carbone, alcénoyloxy en $C_{3-6}$, aroyle allant jusqu'à 10 atomes de carbone, aroyloxy allant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)oxy-carbonyle, chacun desdits substituants alcoyle et alcényle étant à son tour éventuellement substitué par un alcoyle en $C_{1-6}$, un fluoro ou un alcoxy en $C_{1-6}$ à condition que ledit alcoxy mentionné en dernier ne soit pas lié à un atome de carbone déjà lié par une liaison simple à un autre atome d'oxygène ; $R^3$, $R^4$, $R^7$ et $R^8$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit alcoyle exposé ci-dessus ;

chaque $R^5$ et $R^6$ est choisi dans le même groupe que celui exposé ci-dessus pour $R^3$ ;

et $R^5$ et $R^6$ sont choisis parmi alcoxy en $C_{1-16}$-carbonyle, alcanoyloxy en $C_{2-16}$, alcényloxy en $C_{2-16}$-carbonyle, et alcénoyloxy en $C_{3-16}$, dont chacun est non substitué ou substitué par un fluoro, un aryle ayant jusqu'à 10 atomes de carbone, ou un alcoxy en $C_{1-16}$, et $R_5$ et $R_6$ sont encore indépendamment choisis parmi aryloxy ayant jusqu'à 10 atomes de carbone, cycloalcoxy ayant jusqu'à 8 atomes de carbone, cycloalcoyle (jusqu'à 8 atomes de carbone)-carbonyloxy, cycloalcoxy (jusgu'à 8 atomes de carbone)-carbonyle, aroyloxy ayant jusqu'à 11 atomes de carbone, oxacycloalcoxy ayant jusqu'à 7 atomes de carbone, oxacycloalcényloxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy, et aryloxy (jusqu'à 10 atomes de carbone)carbonyle, dont chacun peut être encore substitué par un fluoro, alcoyle en $C_{1-6}$ ou alcoxy en $C_{1-6}$, à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^8$, ensemble avec les atomes auxquels ils sont attachés, peuvent former un noyau cycloalcoyle à 5 à 8 chaînons, oxycycloalcoyle à 5 à 8 chaînons ou bicycloalcoyle à 5 à 8 chaînons ; et chaque $R^9$ est indépendamment choisi parmi hydrogène, alcoyle en $C_{1-4}$ et phényle ledit dispositif ayant un angle de contact aigû inférieur à 60° et ayant un Dk($\times 10^{-10}$ mm $\cdot$ ml $O_2$ /cm$^2$-sec $\cdot$ mmHg) d'au moins environ 7, et une teneur en eau d'au moins 10% à l'état gonflé dans l'environnement aqueux d'utilisation.

2. Dispositif de la revendication 1, dans lequel ledit polymère est copolymère dudit monomère ayant un segment de formule Ia et un monomère modifiant hydrophile en une quantité suffisante pour maintenir la teneur en eau dudit polymère à son état gonflé dans son environnement aqueux d'utilisation à au moins 10%, ledit monomère modifiant hydrophile étant choisi parmi

aa) les polyéthylène glycols de formule

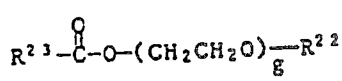

(A)

ou

ab) les pyrrolidones de formule

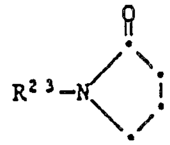

(B)

où $R^{22}$ est un hydrogène ou un alcoyle en $C_{1-7}$, g est un nombre entier allant de 1 à 25,

ou

ac) un composé de formule

$(R^{24}\text{-div})_{nz}$ Hy (C)

où $R^{23}$ est une fraction polymérisable ou réactive choisie parmi i) les radicaux éthyléniquement insaturés, ii) les anhydrides, iii) les amines, iv) les acides, v) les esters, vi) les amides, vii) les éthers, viii) les halogénures d'acides. $R^{24}$ est choisi parmi les significations données pour $R^{23}$ et ix) les groupes époxy, x) les isocyanates et isothiocyanates, et xi) hydroxy ;

div est choisi parmi

ba) un groupe aliphatique bivalent ayant jusqu'à 25 atomes de carbone, qui peut également être interrompu, ou terminé ou interrompu et terminé par un oxy, carbonyloxy, amino, aminocarbonyle, oxycarbonyle, uréido, oxycarbonylamino, ou carbonylamino ;

bb) un groupe cycloaliphatique à 5 à 7 chaînons bivalent et un groupe cycloaliphatique-aliphatique en $C_{1-20}$ à 5 à 7 chaînons qui peut également être interrompu, terminé, ou interrompu et terminé comme dans le groupe ba) ci-dessus, sauf que lesdites interruptions ne peuvent se produire dans lesdites parties cycloaliphatiques ;

bc) un groupe arylène bivalent ayant de 6 à 25 atomes de carbone, qui est non substitué ou substitué par au moins un substituant choisi parmi halogène, alcoyle en $C_{1-4}$ et perhaloalcoyle en $C_{1-12}$ ;

bd) un aralcoyle ou alkaryle ou alcoylèn-aryl-alcoylène bivalent ayant de 7 à 25 atomes de carbone, qui est non interrompu ou interrompu par la partie alcoyle, ou interrompu dans la partie alcoyle, ou terminé, ou interrompu dans la partie alcoyle et terminé avec un groupe interrupteur ou terminant tel que mentionné en ba) ci-dessus, et chacun desdits groupes aralcoyle et alkaryle non interrompus, interrompus et terminés est en outre non substitué ou substitué par un substituant choisi parmi halogène, alcoyle en $C_{1-4}$ et perhaloalcoyle en $C_{1-12}$ ;

be)

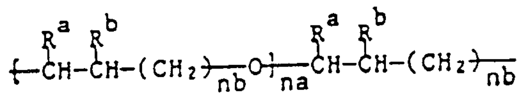

(D)

où na est un nombre entier valant de 8 à 100 ; et

bea) $R^a$ est un hydrogène, $R^b$ est un méthyle, et nb vaut zéro ; ou

beb) $R^a$ est un méthyle, $R^b$ est un hydrogène et nb vaut zéro ; ou

bec) $R^a$ et $R^b$ représentent un hydrogène, et nb vaut 1 ;

nz est un nombre entier valant de 1 jusqu'à la valence de Hy et où nz est inférieur à la valence de Hy, les valences restantes de Hy étant prises par des hydrogènes ;

et Hy est un groupe hydrophile choisi parmi

ca) morpholino ; des radicaux amide cycliques à 5 à 7 chaînons ; des radicaux N,N-diamide cycliques saturés et non saturés à 5 à 6 chaînons ; des groupes de formule

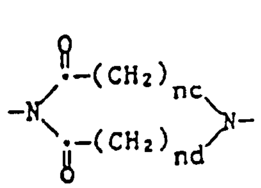

(E) ou

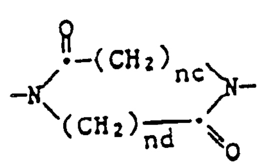

(E')

ayant de 6 à 7 chaînons où nc et nd sont choisis parmi 0-2 ; et les amines cycliques de 5 à 6 chaînons ; chacun étant non substitué ou substitué par un hydroxy-alcoyle en $C_{1-5}$, carboxy ou alcoyle inférieur ;

cb) tétrahydrofurfuryle ;

cc) des radicaux mono-, di-, et polysaccharide, qu'ils soient à chaîne droite ou cycliques, leurs radicaux alcool sucre correspondants, les radicaux pentaérythritol, et les radicaux alcool polyvinylique ;

cd) les radicaux polyhydroxy-alcoyle en $C_{2-7}$.

3. Dispositif de la revendication 1 dans lequel a vaut 1.

4. Dispositif de la revendication 1, dans lequel chaque D et W est un oxygène.

5. Dispositif de la revendication 1, où chaque L représente –BRB'–, chaque B représente –C(O)NH– où l'atome d'azote est lié à R, et R représente

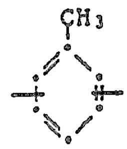

6. Dispositif de la revendication 5, dans lequel R représente

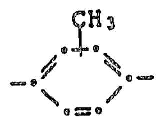

7. Dispositif de la revendication 1, dans lequel chaque $R^1$ et $R^2$ est un méthyle.

8. Dispositif de la revendication 1, dans lequel h et i valent chacun 4.

9. Dispositif de la revendication 1, dans lequel v vaut d'environ 15 à environ 50.

10. Dispositif de la revendication 7, dans lequel h vaut 4 ; i vaut 4 ; et v vaut d'environ 15 à environ 50.

11. Dispositif de la revendication 1, dans lequel

a) chaque b vaut 1 et $R^3$-$R^8$ sont tous des hydrogènes ou

b) chaque b vaut 0, chaque $R^3$, $R^4$ et $R^8$ est un hydrogène, et chaque $R^7$ est un méthyle.

12. Dispositif ophtalmique perméable à l'oxygène, flexible, mouillable, de la revendication 1, comprenant le monomère réticulable ayant

a) une formule partielle

$$-(D{-}A{-}L{-}S'')-_c \quad (IB)$$

où chaque S″ est indépendamment un segment de formule Ia de la revendication 1 ; chaque D, A et L est indépendamment tel que défini dans la revendication 1 ; c vaut de 1 à 10 ; et a multiplié par c vaut de 1 à 10 ; ou

b) une formule partielle

$$-(S'')_c{-}D{-}S'{-}La- \quad (IC)$$

où chaque S″ est indépendamment un segment de formule Ia de la revendication 1 ; D et S′ sont tels que définis dans la revendication 1 ; c vaut 1-10 et La est choisi parmi –BRB′– et –BR–.

13. Dispositif de la revendication 12, où a vaut 1.

14. Dispositif de la revendication 12, où chaque D et W est un oxygène.

15. Dispositif de la revendication 12, où chaque L représente –BRB′–, chaque B représente –C(O)NH– où l'atome d'azote est lié à R, et R représente

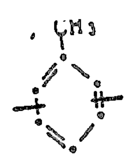

16. Dispositif de la revendication 12, où R représente

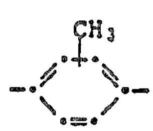

17. Dispositif de la revendication 12, où chaque $R^1$ et $R^2$ est un méthyle.

18. Dispositif de la revendication 12, où h et i valent chacun 4.

19. Dispositif de la revendication 12, où v vaut d'environ 15 à environ 50.

20. Dispositif de la revendication 17, où h vaut 4 ; i vaut 4 ; et v vaut d'environ 15 à environ 50.

21. Dispositif de la revendication 12, dans lequel
a) chaque b vaut 1 et $R^3$-$R^8$ représentent tous des hydrogènes ou
b) chaque b vaut 0, chaque $R^3$, $R^4$ et $R^8$ est un hydrogène, et chaque $R^7$ est un méthyle.
22. Dispositif de la revendication 14, où c vaut 1.
23. Dispositif de la revendication 12, où La représente –BRB′–.
24. Dispositif ophtalmique perméable à l'oxygène, flexible, mouillable, de la revendication 13, le monomère étant de formule

$$L'\left[(D-A-L)_e-S''\right]_c L'' \qquad (I)$$

où e vaut 0 ou 1 ;
chaque D, A, L, S″ et c est indépendamment tel que défini dans la revendication 1 ;
L′ est un hydrogène, P′-BRB′–, P′-RB′–, P′-BR–, ou P′-R– ;
L″ est un hydrogène, P′, ou, dans le cas où e vaut 0, également –D-S′-La-P′ ;
La étant tel que défini dans la revendication 12 ;
et P′ est un hydrogène, amino, hydroxy, NCO, NCS, vinyle ou une fraction contenant un groupe réticulable qui peut être réticulée lorsqu'on la fait coagir avec un agent de réticulation approprié ou lorsqu'on l'irradie par un rayonnement actinique.
25. Dispositif de la revendication 24, où a vaut 1.
26. Dispositif de la revendication 24, dans lequel chaque D et W est un oxygène.
27. Dispositif de la revendication 24, où chaque L représente –BRB′–, chaque B représente –C(O)NH–, où l'atome d'azote est lié à R et R représente

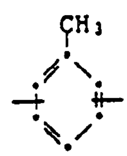

28. Dispositif de la revendication 24, où R représente

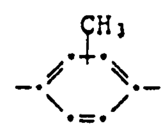

29. Dispositif de la revendication 24, où chaque $R^1$ et $R^2$ est un méthyle.
30. Dispositif de la revendication 24, où h et i valent chacun 4.
31. Dispositif de la revendication 24, où v vaut d'environ 15 à environ 50.
32. Dispositif de la revendication 29, où h vaut 4 ; i vaut 4 ; et v d'environ 15 à environ 50.
33. Dispositif de la revendication 24, où
a) chaque b vaut 1 et $R^3$-$R^8$ représentent tous un hydrogène ou
b) chaque b vaut 0, chaque $R^3$, $R^4$ et $R^8$ est un hydrogène, et chaque $R^7$ est un méthyle.
34. Dispositif de la revendication 24 où c vaut 1.
35. Dispositif de la revendication 24 où L′ représente P′-BRB′–.
36. Dispositif de la revendication 24, où La représente –BRB′–.
37. Dispositif de la revendication 24, où chaque P′ représente

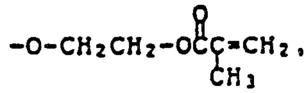

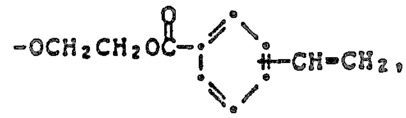 ou

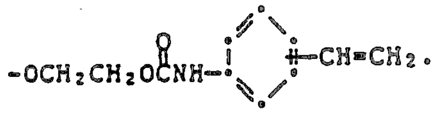

38. Dispositif de la revendication 1, qui est une lentille de contact.

39. Procédé de préparation d'un polymère perméable à l'oxygène, flexible, mouillable, optiquement clair d'un monomère réticulable ayant un segment S" de formule

$$-(W\text{-}S'\text{-}L\text{-}D\text{-}A\text{-}L)_a- \quad (IA)$$

où toutes les variables ont la signification spécifiée dans la revendication 1, ledit polymère ayant un angle de contact aigü inférieur à 60° et ayant un Dk($\times 10^{-10}$ mm · ml $O_2$/cm$^2$ · sec · mmHg) d'au moins environ 7, et une teneur en eau d'au moins 10% à l'état gonflé dans son environnement aqueux d'utilisation en faisant réagir les intermédiaires requis de façon connue.

40. Procédé de la revendication 39, dans lequel ledit polymère est un copolymère dudit monomère ayant un segment de formule Ia et un monomère modifiant hydrophile en une quantité suffisante pour maintenir la teneur en eau dudit polymère à l'état gonflé dans son environnement aqueux d'utilisation à au moins 10%, ledit monomère modifiant hydrophile étant choisi parmi les monomères tels que spécifiés dans la revendication 2.

41. Dispositif de la revendication 2, dans lequel ledit monomère modifiant hydrophile est choisi dans un groupe de formule

$$(R^{24}\text{-div})_{nz}\,Hy \quad (C)$$

42. Procédé de la revendication 40, dans lequel ledit monomère modifiant hydrophile est choisi dans le groupe de formule

$$(R^{24}\text{-div})_{nz}Hy \quad (C)$$

43. Dispositif de la revendication 1, dans lequel au moins 50% desdites séquences polymériques A n'ont pas plus de 15 unités alcoylène par sous-séquence homopolymérique.

44. Dispositif de la revendication 43, dans lequel au moins 75% desdites séquences polymériques A n'ont pas plus de 15 unités alcoylène par sous-séquence homopolymérique.

45. Dispositif de la revendication 44, dans lequel 100% des séquences polymériques A n'ont pas plus de 15 unités alcoylène par sous-séquence homopolymérique.

46. Dispositif de la revendication 1, dans lequel à l'intérieur desdites séquences A n'ayant pas plus de 15 unités oxyalcoylène par sous-séquence homopolymérique, ladite sous-séquence homopolymérique n'a pas plus de 10 unités oxyalcoylène par sous-séquence homopolymérique.

47. Dispositif de la revendication 1, dans lequel à l'intérieur desdites séquences A n'ayant pas plus de 15 unités oxyalcoylène par sous-séquence homopolymérique, ladite sous-séquence homopolymérique n'a pas plus de 7 unités oxyalcoylène par sous-séquence homopolymérique.

48. Dispositif de la revendication 1, dans lequel lesdites séquences A n'ayant pas plus de 15 unités oxyalcoylène par sous-séquence homopolymérique, ladite sous-séquence homopolymérique n'a pas plus de 4 unités oxyalcoylène par sous-séquence homopolymérique.

49. Dispositif selon la revendication 1, dans lequel lesdits groupes A qui sont limités à n'avoir pas plus de 15 unités oxyalcoylène par sous-séquence homopolymérique sont de formule

$$[-\text{polyoxyalcoylène}_1\text{-polyoxyalcoylène}_2-]_{xx}$$

où chaque polyoxyalcoylène$_1$ et polyoxyalcoylène$_2$ est indépendamment un homopolymère d'oxyalcoylène en $C_{2-5}$, chaque homopolymère n'ayant pas plus de 15 unités oxyalcoylène et aucune suite de deux sous-séquences polyoxyalcoylène adjacentes n'est identique et xx est un nombre entier valant de 1 à 500.

50. Application d'un polymère de la revendication 39 ou 40 à la fabrication d'un dispositif ophtalmique.

51. Dispositif de la revendication 24, dans lequel le monomère de formule I est de formule VII,

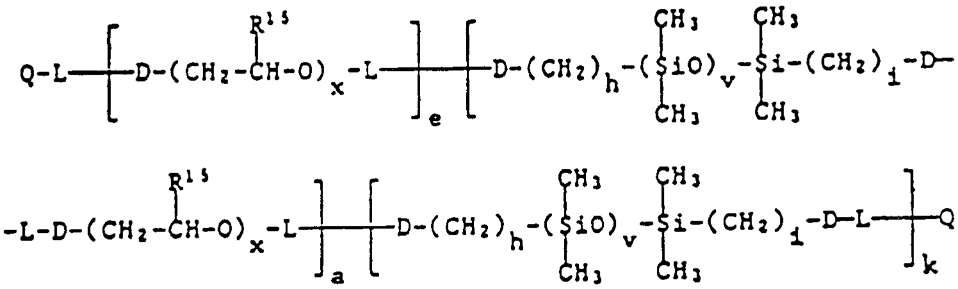

(VII)

où Q représente

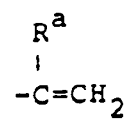

et L représente B-R-B' ou B-R,
l'un des symboles e et k vaut 1 et l'autre 0 ;
$R^a$ est un hydrogène ou un méthyle ; chaque R est un groupe arylène bivalent de 6 à 15 atomes de carbone, un arylène en $C_{6-10}$-amino-carbonyloxy-alcoylène bivalent ou un groupe cycloaliphatique en $C_{3-15}$ bivalent ;
B et B' représentent chacun

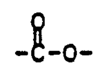 ou 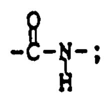 ;

chaque $R^{15}$ est un alcoyle en $C_{1-6}$, ou leurs mélanges avec les unités dans lesquelles $R^{15}$ est un hydrogène, de préférence avec cette précision que $R^{15}$ ne peut être un hydrogène dans plus d'environ 75% d'une unité quelconque ;
chaque x vaut de 4-200, v vaut de 2 à 66, i et h valent indépendamment 2, 3 ou 4 ; et a est un nombre entier allant de 1 à 10.